# EUROPÄISCHE PATENTSCHRIFT

(11) **EP 4 092 958 B1**
(45) Veröffentlichungstag und Bekanntmachung des Hinweises auf die Patenterteilung: **03.07.2024**
(21) Anmeldenummer: 22173852.9
(22) Anmeldetag: 17.05.2022
(51) Int. Cl.: H04L 9/40

(54) **AUSSTELLEN EINES DIGITALEN VERIFIZIERBAREN CREDENTIALS**
ISSUING OF A DIGITAL VERIFIABLE CREDENTIAL
ÉMISSION D'UNE IDENTIFICATION NUMÉRIQUE VÉRIFIABLE

(30) Priorität: 17.05.2021 DE 102021112754
(43) Veröffentlichungstag der Anmeldung: 23.11.2022
(73) Patentinhaber: Bundesdruckerei GmbH, 10969 Berlin (DE)
(72) Erfinder: BASTIAN, Paul, 10243 Berlin (DE); KRAUS, Micha, 10827 Berlin (DE); FISCHER, Jörg, 10317 Berlin (DE)
(74) Vertreter: Richardt Patentanwälte PartG mbB

(56) Entgegenhaltungen:
- EP-A1- 3 318 999
- US-A1- 2020 067 907
- US-A1- 2020 259 656
- ZOLT\'AN ANDR\'AS LUX ET AL: "Distributed-Ledger-based Authentication with Decentralized Identifiers and Verifiable Credentials", ARXIV.ORG, CORNELL UNIVERSITY LIBRARY, 201 OLIN LIBRARY CORNELL UNIVERSITY ITHACA, NY 14853, 8. Juni 2020 (2020-06-08), XP081693439,

## Beschreibung

Die Erfindung betrifft ein Verfahren zum Ausstellen eines digitalen verifizierbaren Credentials unter Verwendung von Nutzerattributen, die von einem ID-Token bereitgestellt werden. Ferner betrifft die Erfindung ein mobiles Endgerät, ein Ausstellercomputersystem sowie ein System zum Ausstellen eines digitalen verifizierbaren Credentials unter Verwendung von Nutzerattributen, die von einem ID-Token bereitgestellt werden.

In einer zunehmend vernetzten Welt erlangen sichere digitale Identitäten sowie verifizierbare und damit vertrauenswürdige digitale Nachweise entsprechender Identitäten immer mehr an Bedeutung. Digitale Identitäten sind beispielsweise eine Voraussetzung zum effektiven Gestalten von digitalen Geschäftsprozessen, digitalen Arbeitsabläufen und technischen Systemen. Zugleich stellen digitale Identitäten als persönliche Daten der Inhaber der entsprechenden Identität jeweils ein sensibles und schutzbedürftiges Gut dar.

Damit digitale Identitäten tatsächlich ihr Potential zur Unterstützung digitaler Geschäftsprozessen, digitaler Arbeitsabläufen und technischer Systeme ausschöpfen können, ist eine hohe Nutzerakzeptanz notwendig. Um eine solche hohe Nutzerakzeptanz zu erreichen ist es aber erforderlich, dass die digitalen Identitäten einerseits die Privatsphäre der Inhaber beachten und deren Schutz in sicherer Form zu gewährleisten vermögen, zugleich aber andererseits einfach und nutzerfreundlich zu handhaben sind. Während sich im Zuge der Digitalisierung in einigen Bereichen Protokolle, wie etwa TCP/IP oder HTTP, langfristig etablieren konnten, fehlt es im Bereich digitaler Identitäten bisher an vergleichbaren Standards. Seit den Anfängen des Internets konnte sich kein weltweiter Standard für die Identifizierung und Authentifizierung durchgesetzt.

Dabei stellt das Fehlen allgemein akzeptierter digitaler Nachweise für die Identifizierung und Authentifizierung von Nutzern eines der größten Digitalisierungshemmnisse dar. Notwendig ist ein Ansatz für digitale Identitäten, welcher einen nahtlosen, sicheren und datensparsamen Austausch von unterschiedlichen digitalen Nachweisen ermöglicht. Die Dokumente US2020/259656, "Distributed-Ledger-based Authentication with Decentralized Identifiers and Verifiable Credentials" von Zoltan Andras Lux et al und EP3318999 bilden Teil des Standes der Technik.

Der Erfindung liegt daher die Aufgabe zugrunde, ein Verfahren zum Ausstellen digitaler verifizierbarer Credentials zu schaffen, welche sicher und nutzerfreundlich zu handhaben sind.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Auslesen ein oder mehrere Nutzerattribute aus einem ID-Token unter Verwendung eines ID-Provider-Computersystems eines ID-Provider-Dienstes und Bereitstellen eines digitalen verifizierbaren Credentials mit den ausgelesenen Nutzerattributen in einer digitalen Ausweiswallet eines mobilen Endgeräts unter Verwendung eines Ausstellercomputersystems eines Ausstellerdienstes einer SSI-Infrastruktur,
wobei die Nutzerattribute eines Nutzers in einem geschützten Speicherbereich eines Speichers des ID-Tokens gespeichert sind,
wobei die SSI-Infrastruktur eine Blockchain umfasst, in welcher ein Datenschema für das digitale verifizierbare Credential und ein dem Ausstellerdienst zugeordneter öffentlicher kryptographischer Schlüssel hinterlegt sind, wobei das Datenschema als Vorlage zum Prüfen des digitalen verifizierbaren Credentials dient, wobei der öffentliche kryptographische Schlüssel des Ausstellerdienstes als Signaturprüfschlüssel zum Prüfen einer Signatur des digitale verifizierbaren Credentials dient, welche mit einem dem Signaturprüfschlüssel zugeordneten privaten kryptographischen Schlüssel des Ausstellerdienstes als Signaturschlüssel erstellt ist,
wobei das Verfahren umfasst:
   - Senden einer Ausstellanfrage zum Ausstellen des digitalen verifizierbaren Credentials von dem mobilen Endgerät über ein Netzwerk an das Ausstellercomputersystem zum Initiieren eines Auslesens der Nutzerattribute durch das ID-Provider-Computersystem aus dem ID-Token,
   - Freigeben eines Lesezugriff des ID-Provider-Computersystems auf die Nutzerattribute in dem ID-Token über das mobile Endgerät und das Netzwerk zum Weiterleiten der ausgelesenen Nutzerattribute an das Ausstellercomputersystem,
   - Empfangen des von dem Ausstellerdienst ausgestellten digitalen verifizierbaren Credentials durch die digitale Ausweiswallet des mobilen Endgeräts von dem Ausstellercomputersystem über das Netzwerk, wobei das digitale verifizierbare Credential in Übereinstimmung mit dem in der Blockchain bereitgestellten Datenschema aufgebaut ist, die ausgelesenen Nutzerattribute umfasst und unter Verwendung des Signaturschlüssels des Ausstellerdienstes signiert ist,
   - Speichern des empfangenen digitalen verifizierbaren Credentials in der Ausweiswallet des mobilen Endgeräts.

Ausführungsformen können den Vorteil haben, dass basierend auf den Prinzipien der Self-Sovereign-Identity (SSI) ein dezentrales Ökosystem digitaler Identitäten implementiert werden kann. Dabei können die entsprechenden digitalen Identitäten in Form von digitalen verifizierbaren Credentials basierend auf einem ID-Token, insbesondere auf einem ID-Token in Form eines offiziellen Dokuments, wie etwa einem elektronischen Personalausweis, einem elektronischen Reisepass und/oder einem elektronischen Führerschein, implementiert werden. Identitätsdaten können in Form von Nutzerattributen in sicherer und einfacher Form aus einem entsprechenden ID-Token ausgelesen und als digitales verifizierbares Credential in einem Wallet-Programm bzw. einer Ausweiswallet auf einem mobilen Endgerät, etwa auf einem Smartphone, hinterlegt werden. Das mobile Endgerät kann die hinterlegten digitalen verifizierbaren Credentials verwenden, ohne dass dazu das ID-Token weiter notwendig ist. Ebenso wenig ist für eine Verwendung der Nutzerattribute in Form des digitalen verifizierbaren Credentials ein weiteres Auslesen des ID-Tokens oder eine weitere Einbindung des ID-Provider-Computersystems notwendig. Vielmehr kann für eine Verwendung des digitalen verifizierbaren Credentials basierend auf der SSI-Infrastruktur nutzerseitig das mobile Endgerät mit der Ausweiswallet ausreichend sein.

Einmal in Form eines digitalen verifizierbaren Credentials auf dem mobilen Endgerät hinterlegte Nutzerattribute können mit dem mobilen Endgerät verwendet werden, ohne dass dazu weitere technische Geräte für den Nutzer notwendig sind. Eine Verwendung der Nutzerattribute wird damit einfach und nutzerfreundlich.

Ein entsprechendes von dem mobilen Endgerät bereitgestelltes digitales verifizierbares Credential wird von einem Empfänger als Prüfer unter Verwendung der SSI-Infrastruktur auf seine Validität geprüft, d.h. verifiziert. Hierzu greift der Prüfer beispielsweise auf die SSI-Infrastruktur zurück, welche eine Blockchain umfasst, welche dem Prüfer die für das Verifizieren notwendigen Daten bereitstellt.

Die digitalen verifizierbaren Credentials und damit die Nutzerattribute können auf dem mobilen Endgerät in sicherer Weise verwahrt werden. Hierzu werden die entsprechend digitalen verifizierbaren Credentials in der Ausweiswallet bzw. in einem der Ausweiswallet zugeordneten geschützten Speicherbereich eines Speichers des mobilen Endgeräts abgespeichert. Insbesondere ermöglicht ein Abspeichern von digitalen verifizierbaren Credentials in der Ausweiswallet auf dem mobilen Endgerät ein mehrmaliges Verwenden der entsprechenden Credentials zum sicheren Ausweisen des Nutzers des mobilen Endgeräts gegenüber Dritten.

Ausführungsformen können den Vorteil haben, dass in effektiver und effizienter Weise ein Ausstellen digitaler verifizierbarer Credentials basierend auf einer SSI-Infrastruktur in Kombination mit einer Infrastruktur zum sicheren Auslesen von Nutzerattributen aus ID-Token bereitgestellt werden kann. Dabei liegt eine enge Bindung zwischen dem Ausstellercomputersystem und dem ID-Provider-Computersystem vor. Beispielsweise umfasst ein Ausstellercomputersystem ein Dienstprogramm ("eService") zum Initiieren des Auslesens der Nutzerattribute unter Verwendung des ID-Provider-Computersystems. Hierzu stellt das Dienstprogramm des Ausstellercomputersystems dem mobilen Endgerät bzw. einem von dem mobilen Endgerät umfassten Client-Programm die notwendigen Daten zum Initiieren des Ausleseverfahrens bereit. Beispielsweise handelt es sich bei den entsprechenden Daten um Daten, welche in Form einer URL ("Uniform Resource Locator") bereitgestellt werden, die es dem Client-Programm ermöglichen, Kontakt mit dem ID-Provider-Computersystem zum Auslesen der angefragten Nutzerattribute aufzunehmen. Die auf diese Weise ausgelesenen Nutzerattribute werden von dem Ausstellercomputersystem verwendet, um ein digitales verifizierbares Credential auszustellen, das in der Ausweiswallet des mobilen Endgerätes hinterlegt wird. Somit basiert das ausgestellte digitale verifizierbare Credential auf nutzerindividuellen Nutzerattributen, welche aus einem Dokument bzw. ID-Token des Nutzers entnommen sind.

Beispielsweise kann initial ein verschlüsselter Kommunikationskanal zwischen Ausweiswallet und dem Ausstellerprogramm aufgebaut werden, im Zuge dessen eine gegenseitige Authentifizierung zwischen Ausweiswallet und Ausstellerprogramm erfolgt. Somit kann bereits zu Beginn des Verfahrens sichergestellt werden, zwischen welchen Parteien das Verfahren initiiert wird und an wen am Ende das ausgestellte digitale verifizierbare Credential gesendet wird. Ferner ermöglicht dies bei einer Integration des ID-Provider-Dienstes bzw. der Funktionalität des ID-Provider-Computersystems in den Ausstellerdienst bzw. das Ausstellercomputersystem einen Aufbau eines verschlüsselten Kommunikationskanals zum Auslesen der Nutzerdaten innerhalb eines zuvor aufgebauten verschlüsselten Kommunikationskanals zwischen Ausweiswallet und Ausstellercomputersystem. Hierzu umfasst das Ausstellercomputersystem, beispielsweise ein zum Auslesen von Nutzerattributen konfiguriertes ID-Provider-Programm. Der entsprechende Auslesekanal kann somit durch den Kanal getunnelt werden, über welchen das digitale verifizierbare Credential bereitgestellt wird und welchem eine gegenseitige Authentifizierung der Teilnehmer zugrunde liegt. Damit kann sichergestellt werden, dass das Auslesen über dasselbe mobile Endgerät, insbesondere über dieselbe Ausweiswallet erfolgt, in welches das digitale verifizierbare Credential später eingebracht wird.

Schließlich können Ausführungsformen den Vorteil haben, dass Schlüsselmaterial sicher auf einem Sicherheitselement des mobilen Endgeräts, wie etwa einem Smartphone, gespeichert werden kann. Beispielsweise wird das entsprechende Schlüsselmaterial in einem Sicherheitselement oder unter Verwendung eines Sicherheitselements gespeichert, das in Form eines Secure Element (SE), einer eSIM, einer elUCC und/oder einer TEE implementiert ist. Das entsprechende Schlüsselmaterial wird beispielsweise von der Ausweiswallet zum kryptographisch gesicherten Speichern digitaler verifizierbarer Credentials verwendet. Beispielsweise werden digitale verifizierbare Credential unter Verwendung des Schlüsselmaterials verschlüsselt und in verschlüsselter Form in dem geschützten Speicherbereich des mobilen Endgeräts gespeichert.

Ausführungsformen können den Vorteil haben, dass eine sichere Übertragung von Identitätsdaten in Form von Nutzerattributen aus einem ID-Token in eine Ausweiswallet eines mobilen Endgeräts ermöglicht wird, indem die Nutzerattribute in Form des digitalen verifizierbaren Credentials in die Ausweiswallet geladen werden. Zur weiteren Verwendung des digitalen verifizierbaren Credentials ist kein ID-Provider mehr notwendig. Ferner ist auch kein weiteres Computerprogramm mehr notwendig. Vielmehr kann das digitale verifizierbare Credential durch den Nutzer allein basierend auf dem mobilen Endgerät mit der Ausweiswallet verwendet werden.

Nach Ausführungsformen wird beispielsweise ein Ausstellerdienst bereitgestellt, welcher auf Basis einer SSI-Infrastruktur eine sichere Übertragung von Nutzerattributen aus einem ID-Token und ein Ausstellen eines digitalen verifizierbaren Credentials in einem Ausweiswallet ermöglicht.

Selbstbestimmte Identitäten ("Self-Sovereign Identity"/SSI) bezeichnen Identitäten einer dezentralen und nutzerzentrierten Infrastruktur für Identität, welche es ermöglich einem Nutzer eine verteilte, selbstbestimmte, die Privatsphäre schützende und sichere Identität in die Hand zu geben.

Die SSI-Grundprinzipien umfassen: Existenz ("Existence"), Kontrolle ("Control"), Zugang ("Access"), Transparenz Persistenz ("Transparency"), Persistenz ("Persistence"), Portabilität ("Portability"), Interoperabilität ("Interoperability"), Einverständnis ("Consent"), Minimierung ("Minimalization"), Protektion ("Protection"). Das Grundprinzip der Existenz verlangt, dass die einzelnen Nutzer jeweils eine unabhängige Identität besitzen. Das Grundprinzip der Kontrolle verlangt, dass die Nutzer ihre jeweilige Identität kontrollieren. Das Grundprinzip des Zugangs verlangt, dass die Nutzer jeweils Zugang zu ihren eigenen Daten haben. Das Grundprinzip der Transparenz verlangt, dass Systeme und Algorithmen transparent sind. Das Grundprinzip der Persistenz verlangt, dass Identitäten langlebig sind. Das Grundprinzip der Portabilität verlangt, dass Informationen über und Dienste für Identitäten portabel sind. Das Grundprinzip der Interoperabilität verlangt, dass Identitäten so weit wie möglich nutzbar sein sollen. Das Grundprinzip des Einverständnisses verlangt, dass die Nutzer der Nutzung ihrer Identität jeweils zustimmen müssen. Das Grundprinzip der Minimierung verlangt, dass eine Offenlegung von Aussagen ("Claims"), wie etwa Nutzerattributen, minimiert wird. Das Grundprinzip der Protektion verlangt, dass die Rechte des Nutzers jeweils geschützt werden.

Dadurch das die Identitäten und deren Verwendung in die Hand der Nutzer geben werden, umfasst eine SSI-Infrastruktur keine zentrale Rolle, wie einem Identity-Provider, welcher bei jedem Authentifizierungsvorgang, d.h. bei jeder Verwendung von Nutzerattributen, involviert ist und somit allwissend über die Aktivitäten der Nutzer Bescheid weiß. Ein Identity-Provider kommt im vorliegenden Fall beispielsweise nur beim Ausstellen von digitalen verifizierbaren Credentials zum Einsatz, nicht aber bei deren Verwendung. Somit erlagt der Identity-Provider auch keine Kenntnis über die Verwendung der entsprechenden Nutzerattribute. Dasselbe gilt für Ausstellercomputersysteme, welche die entsprechenden digitalen verifizierbaren Credentials ausstellen. Auch diese sind nicht in die Verwendung der Nutzerattribute bzw. in das Prüfen der von ihnen ausgestellten digitalen verifizierbaren Credentials involviert. Die Prüfung erfolgt vielmehr durch einen unabhängigen Prüfer, welcher hierzu auf eine Blockchain der SSI-Infrastruktur zurückgreift. Somit erlagen auch die Ausstellercomputersysteme keine Kenntnis über die Verwendung der Nutzerattribute.

Die entsprechende Blockchain implementiert die SSI-Infrastruktur unter Verwendung der Distributed Ledger Technologie (DLT), wodurch ein öffentlich zugänglicher und dezentraler Speicher für Prüfdaten in Form der Blockchain bereitgestellt wird, der beispielsweise zugleich die Privatsphäre der Nutzer zu gewährleistet vermag.

In einem SSI-Dreieck, welches ein Ausstellen und Verwenden eines digitalen verifizierbaren Credentials beschreibt, sind drei Rollen definiert: Aussteller ("Issuer"), Inhaber ("Holder") und Prüfer ("Verifier"). Der Inhaber verwaltet verschiedene digitale verifizierbare Credentials (Nachweise) in einer digitalen Wallet bzw. einem virtuellen Portemonnaie. Diese Credentials sind von ein oder mehreren Ausstellern ausgestellt und beinhalten in der Regel Aussagen ("Claims") über den Inhaber bzw. Nutzer, wie beispielsweise Name, Anschrift, Staatsangehörigkeit und/oder Geburtsdatum. Bei derartigen Aussagen über den Inhaber bzw. Attributen des entsprechenden Nutzers handelt es sich um sogenannte Nutzerattribute, d.h. dem Nutzer zugeordnete Attribute.

Der Inhaber kann beispielsweise über eine Mehrzahl von unterschiedlichen digitalen verifizierbaren Credentials mit unterschiedlichen Nutzerattributen verfügen. Der Inhaber kann dadurch selbstbestimmt entscheiden, welche Nutzerattribute er einem Prüfer zur Prüfung übermittelt. Der Prüfer kann auf Grundlage öffentlicher Prüfdaten, welche beispielsweise eine Blockchain bereitstellt, die Authentizität und Unverfälschbarkeit der übermittelten digitalen verifizierbaren Credentials und damit der bereitgestellten Nutzerattribute sicherstellen. Die Prüfdaten könnenvon einer dezentralen Infrastruktur basierend auf einer Blockchain bzw. einem verteilten Register ("distributed Ledger") des SSI-Ökosystems bereitgestellt werden. Die Prüfdaten können neben Informationen über die Identität des Ausstellers und über das Credential-Schema beispielsweise auch Angaben zu revozierten Credentials umfassen. Die Prüfdaten umfassen beispielsweise keine personenbezogenen Daten des Inhabers der digitalen verifizierbaren Credentials. Somit müssen und werden keine personenbezogenen Daten öffentlich zur Verfügung gestellt. Der Ausstellungsvorgang kann dadurch von dem Authentifizierungsvorgang entkoppelt werden, da für die Prüfung keine Kontaktaufnahme zu dem Aussteller erforderlich ist. Wie in der analogen Welt üblich, erfährt der Aussteller der Nachweise dabei nichts von deren Verwendung, was ein wichtiger Beitrag zur Selbstbestimmung der Nutzer und zur Sicherung von deren Privatsphäre darstellt.

Im Gegensatz zu dem analogen Prozess können im Zuge einer Verwendung von SSI zusätzliche Mechanismen, insbesondere technisch implementierte Mechanismen, zum

Unterstützen der Privatsphäre der Inhaber der digitalen verifizierbaren Credentials bereitgestellt werden. Beispielsweise kann durch eine selektive Offenlegung von Aussagen bzw. Nutzerattributen eines digitalen verifizierbaren Credentials oder logische Aussagen über entsprechende Nutzerattribute die Datenminimierung gefördert werden. Beispielsweise kann zur Altersverifikation eine logische Aussage "über 18" bereitgestellt werden, anstelle eines konkreten Geburtsdatums des Inhabers. Eine Offenlegung von Nutzerattributen kann bei SSI beispielsweise mit einem interaktiven kryptografischen Beweis umgesetzt werden, sodass der Inhaber häufig auch als "Prover" bezeichnet wird. Bei jeder Verbindung zu einer Entität kann ein Inhaber beispielsweise jeweils unter einem neuen Pseudonym auftreten, so dass er nur so viel wie nötig und so wenig wie möglich über sich bekannt geben muss und somit eine unerwünschte Nachverfolgbarkeit erschwert wird. Höchstmögliche Kontrolle und Transparenz über die Daten schaffen Vertrauen beim Nutzer und können dessen Akzeptanz für SSI-basierte Verfahren erhöhen. Durch offene Standards gesicherte Portabilität und Interoperabilität kann beispielsweise ein langfristiger Erhalt eines SSI-Ökosystems gesichert werden.

SSI kann darüber hinaus auch für Unternehmen oder die öffentliche Verwaltung einen Mehrwert bereitstellen, indem ein einheitlicher Standard zum Austausch von Identitätsinformationen geschaffen wird, welcher eine gemeinsame, verteilte und damit ausfallsichere Infrastruktur bietet und eine einfache und sichere Überprüfung von Daten gewährleistet, ohne dabei selbst den Aussteller der hierzu verwendeten digitalen verifizierbaren Credentials kontaktieren zu müssen. Damit kann beispielsweise eine Verarbeitung Identitätsinformationen in Form von entsprechenden digitalen verifizierbaren Credentials beschleunigt werden, da etwa über eine Schnittstelle mehrere digitalen verifizierbaren Credentials verschiedener Aussteller gleichzeitig überprüft werden können und sich somit ein kostensparender und schlanker Datenverarbeitungsprozess implementieren lässt. Es ist keine Kontaktaufnahme zu mehreren verschiedenen Ausstellern notwendig. Vielmehr kann für eine Verifizierung die Blockchain der SSI-Infrastruktur ausreichen.

In der W3C werden dezentrale Identifikatoren ("Decentralized Identifiers"/DIDs) (s. https://www.w3.org/TR/did-core/) und digitale verifizierbare Credentials ("Verifiable Credentials"/VC) (s. https://www.w3.org/TR/vc-data-model/) spezifiziert. Diese Standards ermöglichen die Identifizierung eines DID-Subjekts ("DID subject"), d.h. einer Entität, wie etwa einem Nutzer oder einer Organisation etc., ohne von zentralen Diensten abhängig zu sein. In der Decentralized Identity Foundation (DIF) (s. https://identity.foundation/) findet sich eine Standardisierung zu DIDComm (https://github.com/decentralized-identity/DIDComm-messaging), einer sicheren und auf DIDs aufbauenden dezentralen Kommunikationsschicht.

Mit digital verifizierbaren Credentials können überprüfbare Nutzerattribute zwischen einem Aussteller und Inhaber bzw. Inhaber und einem Prüfer direkt ausgetauscht werden.

Ein öffentliches genehmigungspflichtige Registernetzwerk ("public permissioned ledger") bzw. Blockchain-Netzwerk kann beispielsweise ein die Privatsphäre von Nutzer in vorteilhafter Weise förderndes Identitätsnetzwerk darstellen. Da auf dem Ledger bzw. in der Blockchain lediglich öffentliche Informationen von Ausstellern und Prüfern, insbesondere institutionellen Ausstellern und Prüfern, gespeichert sind, jedoch keine nutzerbezogenen Daten, lassen sich hiermit klassische DLT-Probleme wie Skalierung, Effizienz und Energieverbrauch effektiv lösen.

Ein SSI-Stackteilt sich beispielsweise in vier Schichten auf. Das SSI-Schichtmodell umfasst dabei auf der ersten, untersten Schicht öffentliche Einrichtungen ("Public Utilities") bzw. Infrastruktureinrichtungen, auf der zweiten Schicht Protokolle für kryptografisch sichere Verbindungen, beispielsweise DIDComm Peer-to-Peer-Protokolle ("DIDComm Peerto Peer Protocol"), auf der dritten Schicht Datenaustauschprotokolle ("Data Exchange Protocols") und auf der vierten, obersten Schicht das Anwendungsökosystem ("Application Ecosystem"). Das Fundament und die Infrastruktur werden durch eine Blockchain, d.h. ein verteiltes Register bzw. einen verteilten Datenspeicher ("Distributed Ledger") gebildet. Die Blockchain wird von ausgewählten Knoten betrieben und enthält die öffentlichen Daten der teilnehmenden Entitäten. Die Identitäten der Teilnehmer werden über dezentrale Identifikatoren ("Decentralized Identifiers"/DIDs) realisiert. Ein DID ist, vergleichbar einer URL, auflösbar zu einem Identifikationsdokument bzw. DID-Dokument ("DID document"), welches in der Blockchain gespeichert ist. In dem DID-Dokument sind Daten wie Service-Schnittstellen oder öffentliche Schlüssel hinterlegt. Die Aussteller legen zudem Metadaten zu Credentials in der Blockchain ab, zum Beispiel Schemata oder Revozierungsdaten.

Die über DIDs repräsentierten Identitäten können auf der darüber liegenden Schicht eine kryptografisch sichere Verbindung aufbauen. Das als "DIDComm" standardisierte Protokoll definiert Aktivitäten vom Verbindungsaufbau bis zum Austausch von Nachrichten. Die DIDs und das zugehörige Schlüsselmaterial werden in Wallets gespeichert und von entsprechenden Computerprogrammen bzw. Softwareagenten verwendet.

In Schicht drei erfolgt der eigentliche Austausch und die Verbindung der drei Parteien des SSI-Ökosystems. Aussteller beziehungsweise Prüfer stehen in direkter Verbindung zu dem Inhaber. Der Aussteller stellt dem Inhaber digitale verifizierbare Credentials aus. Diese können von dem Prüfer angefragt und von dem Inhaber präsentiert werden. Das Vertrauen zwischen Prüfer und Aussteller wird indirekt über das Netzwerk abgebildet.

Schlussendlich stellt die vierte Schicht die Anwendung der SSI-Technologie dar, beispielsweise in Geschäftsprozessen, bei Behördengängen und anderen Anwendungen Nachweise von Identitäten und Beglaubigungen dar. Der technische SSI-Stack wird begleitet von einem organisatorisch-rechtlichen Rahmen, der die Regeln des SSI-Netzwerks festlegt, sowie die rechtliche und regulatorische Verbindung zur realen Welt klärt.

SSI ermöglicht es eine interoperable und wiederverwendbare Ebene für Identifizierungs- und Authentifizierungsprozesse bereitzustellen. Beispielsweise kann der Betrieb der SSI-Infrastruktur von einem festen Kreis an Netzwerkbetreibern sowie durch organisatorische und technische Maßnahmen sichergestellt werden. Um als solide Basis für die beteiligten Teilnehmer, z.B. Aussteller, Inhaber, Prüfer, zu fungieren, erfüllt die SSI-Infrastruktur beispielsweise insbesondere folgende Eigenschaften: Es wird eine Unverfälschbarkeit und/oder eine eindeutige Zuordnung von Transaktionen in der Blockchain zu deren Autor sichergestellt, wodurch sich die Authentizität der Daten gewährleisten lässt. Durch eine Überprüfbarkeit des aktuellen Zustands der Blockchain kann die Integrität der von der Blockchain bereitgestellten Daten gewährleistet werden. Selbst bei mehreren fehlerhaften Knotenbetreibern lässt sich die Ausfallsicherheit des Blockchain-Netzwerks sicherstellen und damit die Verfügbarkeit, Redundanz und Robustheit der Datenspeicherung. Da es sich bei den in der Blockchain, beispielsweise öffentlich zugänglich abgespeicherten Prüfdaten, um nicht personenbezogene Prüfdaten handelt, die gerade öffentlich zugänglich und zu einer öffentlichen Entität zuordenbar sein sollen, spielen Vertraulichkeit und Anonymität in dieser Hinsicht keine Rolle.

Die verwendete SSI-Infrastruktur umfasst beispielsweise eine öffentliche, genehmigungspflichtige, d.h. public permissioned, Blockchain. Diese Ledger-Technologie verbindet einerseits Eigenschaften öffentlicher, genehmigungsloser ("public permissionless") Blockchain-Varianten, wie etwa Bitcoin und Ethereum, mit Eigenschaften von privaten, genehmigungspflichtigen (private permissioned) Blockchain-Varianten, wie etwa R3 Corda und Hyperledger Fabric. Das Blockchain-Netzwerk umfasst mehreren Blockchain-Servern, welche beispielsweise als Netzwerkknoten bzw. Validierungsknoten ("Validator Nodes") dienen, die einem genehmigungspflichtigen Blockchain-Netzwerk entsprechend von speziell befähigten beziehungsweise ernannten Akteuren ("Stewards") betrieben werden. Die Netzwerkknoten bilden untereinander Vertrauen beispielsweise unter Verwendung eines Konsensalgorithmus. Beispielsweise kann ein Konsens mit dem Plenum-Protokoll gebildet werden, einem Redundant Byzantine Fault Tolerance Algorithmus (RBFT), welcher eine redundante Version des als sicher evaluierten PBFT darstellt. Algorithmusbedingt wird für eine maximale Anzahl F von bösartig oder fehlerhaft agierenden Netzwerkknoten eine Anzahl N = 3F + 1 von Gesamtknoten im Blockchain-Netzwerk benötigt. Eine sinnvolle Größe eines Blockchain-Netzwerks beinhaltet beispielsweise 25 Netzwerkknoten und/oder um die 25 Netzwerkknoten, sodass eine gute Ausfallsicherheit gewährleistet und der entsprechende Konsensalgorithmus möglichst effizient arbeitet kann. Die Effizienz von RBFT und der hohe Durchsatz bei geringem Ressourcenaufwand entspricht dabei den Vorteilen einer genehmigungspflichtigen (permissioned) Blockchain.

Lesezugriffe auf das Blockchain-Netzwerk bzw. die von dem Blockchain-Netzwerk bereitgestellte Blockchain sind beispielsweise frei zugänglich und erfordern keine Authentisierung, analog zu den typischen Eigenschaften einer öffentlichen ("public") Blockchain. Schreibzugriffe sind jedoch beispielsweise genehmigungspflichtig und bedürfen neben der Signatur des Autors zusätzlich einer Zustimmung eines Genehmigungsberechtigten ("Endorser"). Als initiale Transaktion erstellt ein Autor beispielsweise seine DID und hinterlegt seinen abgeleiteten öffentlichen kryptographischen Schlüssel. Alle weiteren Transaktionen signiert der Autor selbst mit seinem zugehörigen privaten kryptographischen Schlüssel, sodass die Authentizität der Daten gewährleistet und einfach überprüfbar ist. Die so entstehenden Transaktionen sendet der Autor an mehrere Netzwerkknoten des Blockchain-netzwerks und sobald er mehr als F + 1 positive Antworten empfangen hat, ist die Finalität bzw. Konsistenz gegeben. In einem entsprechenden Blockchain-Netzwerk kann der Konsens über die entsprechenden Daten beispielsweise mittels einer Boneh-Lynn-Shacham (BLS)-Multisignatur abgespeichert werden, welche eine zweifelsfreie Konsistenz der Netzwerkknoten beweist, sodass bei einer Leseanfrage nur ein einziger Knoten angefragt werden muss. Die gespeicherten Transaktionen werden beispielsweise als geordnete Liste mit einem Merkle-Tree gespeichert. Der korrekte Zustand der Blockchain kann anhand eines aktuellen Zustandsnachweis ("State Proof") und eines Auditierungspfads des Merkle-Tree überprüft werden. Die Authentizität der Genehmigungsberechtigten kann beispielsweise unter Verwendung ihnen zugeordneter öffentlicher kryptographischer Schlüssel aus einer Genesisdatei ("Genesis File") des Blockchain-Netzwerks sichergestellt werden.

Um die Regeln des genehmigungspflichtigen Blockchain-Netzwerks durchzusetzen, ist der Blockchain beispielsweise eine eigene Konfiguration und ein integriertes Rechte und Regelsystem zugeordnet. Dieses System umfasst beispielsweise die folgenden: Ein Verwalter ("Trustee") verwaltet die Rechte anderer Mitglieder und kann das Regelwerk festlegen. Ein Akteur ("Steward") betreibt einen Netzwerkknoten. Ein Genehmigungsberechtigter ("Endorser") bestätigt den Schreibzugriff regulärer Datentransaktionen. Ein Netzwerküberwacher ("Network Monitor") überwacht und analysiert die Metadaten für ordnungsgemäßen Betrieb des Netzwerks.

Eine DID eines Ausstellers wird beispielsweise zusammen mit einem öffentlichen kryptografischen Schlüssel des Ausstellers in der Blockchain bzw. dem Blockchain-Netzwerk hinterlegt. Dessen Identität kann also innerhalb des Blockchain-Netzwerks über diese öffentlichen kryptografischen Schlüssel verifiziert werden. Durch technische Maßnahmen kann eine Unverfälschbarkeit von ausgestellten Daten bzw. eines digitalen verifizierbaren Credentials gewährleistet werden, d.h. dessen Integrität und Authentizität. Ein Prüfer überprüft die Unverfälschbarkeit, indem er die Signatur des Ausstellers validiert. Hierfür kann beispielsweise ein Signaturschema verwendet werden, welches einen Zero Knowledge Proof (ZKPs) unterstützt, wie etwa Camenisch-Lysyanskaya oder BBS+ Signaturverfahren. Im Rahmen einer solchen Signaturprüfung, erfährt der Prüfer lediglich, dass der Inhaber die Kenntnis einer gültigen Signatur der offengelegten Nutzerattribute beweist. Hierdurch können beispielsweise eine selektive Offenlegung und/oder logische Aussagen unterstützt werden.

Ausführungsformen können ferner eine Möglichkeit implementieren, ausgestellte digitale verifizierbare Credentials zurückzurufen. Dies kann beispielsweise erforderlich werden aufgrund fehlerhaft ausgestellter oder veralteter Daten, aufgrund einer missbräuchlichen Nutzung des digitalen verifizierbaren Credentials oder eines Verlusts eines zugehörigen privaten kryptographischen Schlüssels. Hierbei zeichnen sich beispielsweise insbesondere zwei Punkte als Privatsphäre fördernde Mechanismen aus: Zum einen ist für eine Überprüfung der Gültigkeit eines digitalen verifizierbaren Credentials keine direkte Verbindung zu dem Aussteller notwendig. Stattdessen werden öffentlich zugängliche und hochverfügbare Prüfdaten aus der Blockchain verwendet. Zum anderen werden beispielsweise auch in diesem Kontext ZKPs verwendet, so dass auch bei dieser Prüfung eine Korrelation zwischen verschiedenen Vorgängen derselben Person verhindert werden. Dies kann beispielsweise durch einen Prüfalgorithmus basierend auf einem kryptografischen Akkumulator implementiert werden.

Für die digitalen verifizierbaren Credentials wird beispielsweise eine Strukturierung mittels JSON-LD verwendet.

Unter einem "ID-Token" wird hier ein tragbares elektronisches Gerät verstanden, zum Beispiel eine Chipkarte oder ein Dokument, auf welchem Nutzerattribute eines Nutzers gespeichert sind. Unter einem "Dokument" wird insbesondere ein Ausweis-, Wert- oder Sicherheitsdokument verstanden, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Unter einem Sicherheitselement wird ein gesichertes Element eines mobilen Endgeräts verstanden, welches kryptographische Mittel bereitstellt. Diese kryptographischen Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher Applets und/oder vertrauliche und/oder kryptographische Daten gemäß vordefinierten Regeln und Sicherheitsanforderungen von zuverlässig identifizierten vertrauenswürdigen Instanzen gespeichert und so berechtigten Anwendungsprogrammen, wie einer Anwendungswallet, und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Ein Sicherheitselement kann beispielsweise in Form eines Secure Element (SE) implementiert sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein solcher Key-Store bzw. Sicherheitselement kann auch als Teil des Hauptprozessors implementiert sein, beispielsweise in einer TEE ("Trusted Excecution Environment"). Beispielsweise kann das Sicherheitselement unter Verwendung einer TEE implementiert sein. Sicherheitselemente sind beispielsweise als Hardware und/oder Firmware implementiert. Nach Ausführungsformen können Sicherheitselemente bzw. Key Stores auch als Software implementiert sein. Zwei Sicherheitselemente sind beispielsweise unabhängig voneinander, wenn es keine gemeinsame Instanz gibt, welche zugriffsberechtigt für beide Sicherheitselemente ist.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Kommunikationskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüssein, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem mobilen Endgerät wird beispielsweise ein mobiles tragbares Kommunikationsgerät, wie etwa ein Smartphone, ein Tablet oder eine Smartwatch verstanden.

Nach Ausführungsformen dient das Datenschema ferner als Vorlage zum Erstellen des digitalen verifizierbaren Credentials.

Nach Ausführungsformen umfasst das Freigeben des Lesezugriff des ID-Provider-Computersystems:
- Authentisieren des Nutzers gegenüber dem ID-Token unter Verwendung des mobilen Endgeräts,
- Authentisieren des ID-Provider-Computersystems gegenüber dem ID-Token über das mobile Endgerät unter Verwendung eines PKI-basierten Lesezertifikats des ID-Provider-Computersystems zum Auslesen der Nutzerattributen aus dem ID-Token,
- auf eine erfolgreiche Authentisierung des Nutzers und des ID-Provider-Computersystems gegenüber dem ID-Token, wird der Lesezugriff des ID-Provider-Computersystems freigegeben.

Nach Ausführungsformen baut das mobile Endgerät einen ersten verschlüsselten Kommunikationskanal über das Netzwerk zu dem Ausstellercomputersystem auf, über welchen die Ausstellanfrage gesendet wird.

Nach Ausführungsformen handelt es sich bei dem ersten verschlüsselten Kommunikationskanal um einen TLS-Kanal.

Nach Ausführungsformen handelt es sich bei dem ersten verschlüsselten Kommunikationskanals um einen TLS-Kanal, d.h. einen unter Verwendung des TLS-Verschlüsselungsprotokolls verschlüsselten Kommunikationskanals.

Nach Ausführungsformen authentisiert sich das Ausstellercomputersystem im Zuge des Aufbaus des ersten verschlüsselten Kommunikationskanals gegenüber dem mobilen Endgerät.

Nach Ausführungsformen umfasst das mobile Endgerät ferner ein Client-Programm, über welches der Lesezugriff des ID-Provider-Computersystems auf den ID-Token erfolgt, wobei der Lesezugriff des ID-Provider-Computersystems auf den ID-Token über einen zweiten verschlüsselten Kommunikationskanal.

Nach Ausführungsformen erfolgt der Aufbau des ersten verschlüsselten Kommunikationskanals seitens des mobilen Endgeräts unter Verwendung eines auf dem mobilen Endgerät installierten Browsers, wobei ein Aufbauen des zweiten verschlüsselten Kommunikationskanals umfasst:
- Aufrufen einer Webseite des Ausstellers unter Verwendung des Browsers umfasst, wobei die Webseite eine URL zum Abrufen von Parametern zum Aufbau des zweiten verschlüsselten Kommunikationskanals zum Auslesen der Nutzerattribute bereitstellt,
- Aufrufen der URL unter Verwendung des Browsers,
- Bereitstellen der von der aufgerufenen URL umfassten Parameter für das Client-Programm,
- Aufbauen des zweiten verschlüsselten Kommunikationskanals über das Client-Programm unter Verwendung der von der URL bereitgestellten Parameter.

Nach Ausführungsformen ruft der Nutzer unter Verwendung des Browsers des mobilen Endgeräts die Webseite des Austellers auf. Nach Ausführungsformen ruft der Nutzer die Webseite des Austellers direkt aus dem Browser auf. Nach Ausführungsformen umfasst die Ausweiswallt ein Funktionselement, durch dessen Aktivierung das Aufrufen der Webseite des Austellers durch den Browser initiiert wird.

Nach Ausführungsformen erfolgt der Aufbau des ersten verschlüsselten Kommunikationskanals seitens des mobilen Endgeräts durch die Ausweiswallet, wobei ein Aufbauen des zweiten verschlüsselten Kommunikationskanals umfasst:
- in Antwort auf die Ausstellanfrage, Empfangen der URL zum Abrufen von Parametern zum Aufbau des zweiten verschlüsselten Kommunikationskanals durch die Ausweiswallet,
- Aufrufen der URL durch die Ausweiswallet,
- Aufbauen des zweiten verschlüsselten Kommunikationskanals über das Client-Programm unter Verwendung der von der URL bereitgestellten Parameter.

Nach Ausführungsformen umfasst das Verfahren ferner ein Aufbauen eines dritten verschlüsselten Kommunikationskanals zwischen der Ausweiswallet und dem Ausstellercomputersystem, über welchen die Ausweiswallt das digitale verifizierbare Credential empfängt, wobei der Aufbau des dritten verschlüsselten Kommunikationskanal eine gegenseitige Authentisierung zwischen Ausweiswallet und Ausstellercomputersystem umfasst.

Nach Ausführungsformen empfängt der Browser eine Aufforderung zum Aufbau des dritten verschlüsselten Kommunikationskanals, wobei die Aufforderung ein oder mehrere Parameter des Ausstellercomputersystems zum Aufbau des dritten verschlüsselten Kommunikationskanals umfasst und der Browser die Aufforderung der Ausweiswallet zum Aufbau des dritten verschlüsselten Kommunikationskanals bereitstellt.

Nach Ausführungsformen empfängt der Browser die Aufforderung zum Aufbau des dritten verschlüsselten Kommunikationskanals auf ein erfolgreiches Auslesen der Nutzerattribute hin empfängt.

Nach Ausführungsformen empfängt der Browser die Aufforderung zum Aufbau des dritten verschlüsselten Kommunikationskanals in Antwort auf das Aufrufen der Webseite des Ausstellerdienstes empfängt, wobei ein erfolgreicher Aufbau des dritten verschlüsselten Kommunikationskanals eine Voraussetzung für den Aufbau des zweiten verschlüsselten Kommunikationskanals zum Auslesen der Nutzerattribute ist.

Nach Ausführungsformen wird die URL zum Aufbau des zweiten verschlüsselten Kommunikationskanals dem Browser des mobilen Endgeräts beispielsweise erst auf einen erfolgreichen Aufbau des dritten verschlüsselten Kommunikationskanals hin bereitgestellt.

Nach Ausführungsformen umfasst die Ausweiswallet das Client-Programms, wobei die Ausstellanfrage unter Verwendung des Client-Programms gesendet wird, wobei der erste verschlüsselte Kommunikationskanal zwischen der Ausweiswallet und dem Ausstellercomputersystem aufgebaut wird.

Nach Ausführungsformen wird die Ausstellanfrage unter Verwendung eines API-Calls an das Ausstellercomputersystem gesendet.

Nach Ausführungsformen empfängt die Ausweiswallet in Antwort auf die Ausstellanfrage die Aufforderung zum Aufbau eines dritten verschlüsselten Kommunikationskanals zwischen der Ausweiswallet und dem Ausstellercomputersystem und baut den dritten verschlüsselten Kommunikationskanal unter Verwendung der von der Aufforderung bereitgestellten Parameter auf,
wobei ein erfolgreicher Aufbau des dritten verschlüsselten Kommunikationskanals eine Voraussetzung für den Aufbau des zweiten verschlüsselten Kommunikationskanals ist, welcher als verschlüsselter Unterkanal in dem dritten Kommunikationskanal aufgebaut wird.

Nach Ausführungsformen wird die URL zum Aufbau des zweiten verschlüsselten Kommunikationskanals der Ausweiswallet des mobilen Endgeräts beispielsweise erst auf einen erfolgreichen Aufbau des dritten verschlüsselten Kommunikationskanals hin bereitgestellt

Nach Ausführungsformen handelt es sich bei dem dritten verschlüsselten Kommunikationskanal um einen DIDComm-Kanal.

Beispielsweise handelt es sich bei dem dritten verschlüsselten Kommunikationskanal um einen DIDComm-Kanal, d.h. einen unter Verwendung des DIDComm-Verschlüsselungsprotokolls verschlüsselten Kommunikationskanals.

Nach Ausführungsformen umfasst das Ausstellercomputersystem das ID-Provider-Computersystem.

Nach Ausführungsformen handelt es sich bei dem Ausstellercomputersystem und dem ID-Provider-Computersystem um dasselbe Computersystem. Beispielsweise ist auf dem Ausstellercomputersystem ein ID-Provider-Programm installiert, welches dazu konfiguriert ist die hierin beschriebenen Funktionen eines ID-Provider auszuführen. Falls das Ausstellercomputersystem das ID-Provider-Computersystem umfasst handelt es sich bei dem Weiterleiten der ausgelesenen Nutzerattribute von dem ID-Provider-Computersystem an das Ausstellercomputersystem um ein internes Weiterleiten der ausgelesenen Nutzerattribute innerhalb des Ausstellercomputersystems. Beispielsweise werden die ausgelesenen Nutzerattribute von einem auf dem Ausstellercomputersystem installierten ID-Provider-Programm an ein auf dem Ausstellercomputersystem installierten Ausstellerprogramm. Nach Ausführungsformen handelt es sich bei dem ID-Provider-Computersystem um ein von dem Ausstellercomputersystem unabhängiges Computersystem.

Nach Ausführungsformen leitet das ID-Provider-Computersystems die ausgelesenen Nutzerattribute über einen vierten verschlüsselten Kommunikationskanal an das Ausstellercomputersystem weiter.

Nach Ausführungsformen handelt es sich bei dem vierten verschlüsselten Kommunikationskanal um einen TLS-Kanal.

Beispielsweise handelt es sich bei dem vierten verschlüsselten Kommunikationskanal um einen TLS-Kanal, d.h. einen unter Verwendung des TLS-Verschlüsselungsprotokolls verschlüsselten Kommunikationskanals.

Ausführungsformen umfassen ferner ein mobiles Endgerät zum Auslesen ein oder mehrere Nutzerattribute aus einem ID-Token und Bereitstellen eines digitalen verifizierbaren Credentials mit den ausgelesenen Nutzerattributen in einer digitalen Ausweiswallet des mobilen Endgeräts, wobei das Auslesen über das mobile Endgerät unter Verwendung eines ID-Provider-Computersystems eines ID-Provider-Dienstes erfolgt, wobei es sich bei dem bereitgestellten digitalen verifizierbaren Credential um ein unter Verwendung eines Ausstellercomputersystems eines Ausstellerdienstes einer SSI-Infrastruktur ausgestelltes digitalen verifizierbaren Credential handelt,
wobei die SSI-Infrastruktur eine Blockchain umfasst, in welcher ein Datenschema für das digitale verifizierbare Credential und ein dem Ausstellerdienst zugeordneter öffentlicher kryptographischer Schlüssel hinterlegt sind, wobei das Datenschema als Vorlage zum Prüfen des digitalen verifizierbaren Credentials dient, wobei der öffentliche kryptographische Schlüssel des Ausstellerdienstes als Signaturprüfschlüssel zum Prüfen einer Signatur des digitale verifizierbaren Credentials dient, welche mit einem dem Signaturprüfschlüssel zugeordneten privaten kryptographischen Schlüssel des Ausstellerdienstes als Signaturschlüssel erstellt ist,
wobei das mobile Endgerät einen Prozessor, einen Speicher mit Programminstruktionen, eine Kommunikationsschnittstelle zur Kommunikation mit dem ID-Token und eine Kommunikationsschnittstelle zur Kommunikation über ein Netzwerk umfasst,
wobei ein Ausführen der Programminstruktionen durch den Prozessor des mobilen Endgeräts den Prozessor dazu veranlasst, das mobile Endgerät zu steuern zum:
   - Senden einer Ausstellanfrage zum Ausstellen des digitalen verifizierbaren Credentials von dem mobilen Endgerät über das Netzwerk an das Ausstellercomputersystem zum Initiieren eines Auslesens der Nutzerattribute durch das ID-Provider-Computersystem aus dem ID-Token,
   - Freigeben eines Lesezugriff des ID-Provider-Computersystems auf die in einem geschützten Speicherbereich eines Speichers des ID-Tokens gespeicherten Nutzerattribute über das mobile Endgerät und das Netzwerk zum Weiterleiten der ausgelesenen Nutzerattribute an das Ausstellercomputersystem,
   - Empfangen des von dem Ausstellerdienst ausgestellten digitalen verifizierbaren Credentials durch die digitale Ausweiswallet des mobilen Endgeräts von dem Ausstellercomputersystem über das Netzwerk, wobei das digitale verifizierbare Credential in Übereinstimmung mit dem in der Blockchain bereitgestellten Datenschema aufgebaut ist, die ausgelesenen Nutzerattribute umfasst und unter Verwendung des Signaturschlüssels des Ausstellerdienstes signiert ist,
   - Speichern des empfangenen digitalen verifizierbaren Credentials in der Ausweiswallet des mobilen Endgeräts.

Ausführungsformen umfassen ferner ein Ausstellercomputersystem eines Ausstellerdienstes einer SSI-Infrastruktur zum Auslesen ein oder mehrere Nutzerattribute aus einem ID-Token und Bereitstellen eines digitalen verifizierbaren Credentials mit den ausgelesenen Nutzerattributen in einer digitale Ausweiswallet eines mobilen Endgeräts, wobei das Auslesen über das mobile Endgerät unter Verwendung eines ID-Provider-Computersystems eines ID-Provider-Dienstes erfolgt,
wobei die SSI-Infrastruktur eine Blockchain umfasst, in welcher ein Datenschema für das digitale verifizierbare Credential und ein dem Ausstellerdienst zugeordneter öffentlicher kryptographischer Schlüssel hinterlegt sind, wobei das Datenschema als Vorlage zum Prüfen des digitalen verifizierbaren Credentials dient, wobei der öffentliche kryptographische Schlüssel des Ausstellerdienstes als Signaturprüfschlüssel zum Prüfen einer Signatur des digitale verifizierbaren Credentials dient, welche mit einem dem Signaturprüfschlüssel zugeordneten privaten kryptographischen Schlüssel des Ausstellerdienstes als Signaturschlüssel erstellt ist,
wobei Ausstellercomputersystem einen Prozessor, einen Speicher mit Programminstruktionen und eine Kommunikationsschnittstelle zur Kommunikation über ein Netzwerk umfasst,
wobei ein Ausführen der Programminstruktionen durch den Prozessor des Ausstellercomputersystem den Prozessor dazu veranlasst, das Ausstellercomputersystem zu steuern zum:
   - Empfangen einer Ausstellanfrage zum Ausstellen des digitalen verifizierbaren Credentials von dem mobilen Endgerät über das Netzwerk,
   - Initiieren eines Auslesens der Nutzerattribute durch das ID-Provider-Computersystem aus einem geschützten Speicherbereichs eines Speichers des ID-Tokens auf die Ausstellanfrage hin,
   - Empfangen über das mobile Endgerät und das Netzwerk ausgelesenen Nutzerattribute von dem ID-Provider-Computersystem,
   - Ausstellen des digitalen verifizierbaren Credential, welches die ausgelesenen Nutzerattribute umfasst, in Übereinstimmung mit dem in der Blockchain bereitgestellten Datenschema aufgebaut ist und Verwendung des Signaturschlüssels des Ausstellerdienstes signiert ist,
   - Senden des ausgestellten digitalen verifizierbaren Credentials über das Netzwerk an dies Ausweiswallet des mobilen Endgeräts.

Nach Ausführungsformen umfasst das Ausstellercomputersystem das ID-Provider-Computersystem zum Auslesen der Nutzerattribute aus dem ID-Token.

Ausführungsformen umfassen ferner ein System zum Auslesen ein oder mehrere Nutzerattribute aus einem ID-Token und Bereitstellen eines digitalen verifizierbaren Credentials mit den ausgelesenen Nutzerattributen in einer digitalen Ausweiswallet eines mobilen Endgeräts nach einer der vorgenannten Ausführungsformen eines mobilen Endgeräts unter Verwendung eines Ausstellercomputersystems eines Ausstellerdienstes einer SSI-Infrastruktur, wobei es sich bei dem Ausstellercomputersystem um ein Ausstellercomputersystem nach einer der vorgenannten Ausführungsformen eines Ausstellercomputersystems und das Auslesen durch das Ausstellercomputersystem über das mobile Endgerät unter Verwendung eines ID-Provider-Computersystems eines ID-Provider-Dienstes erfolgt.

Nach Ausführungsformen umfasst das System ferner das ID-Provider-Computersystem.

Nach Ausführungsformen umfasst das Ausstellercomputersystem das ID-Provider-Computersystem zum Auslesen der Nutzerattribute aus dem ID-Token. Nach Ausführungsformen handelt es sich bei dem ID-Provider-Computersystem um ein von dem Ausstellercomputersystem unabhängiges Computersystem.

Nach Ausführungsformen umfasst das System ferner die Blockchain.

Im Weiteren werden Ausführungsformen der Erfindung mit Bezugnahme auf die Zeichnungen näher erläutert. Es zeigen:
- Figur 1: ein schematisches Blockdiagramm eines exemplarischen Systems zum Ausstellen eines digitalen verifizierbaren Credentials,
- Figur 2: ein schematisches Flussdiagramm eines exemplarischen Verfahrens zum Ausstellen eines digitalen verifizierbaren Credentials,
- Figur 3: ein schematisches Flussdiagramm eines weiteren exemplarischen Verfahrens zum Ausstellen eines digitalen verifizierbaren Credentials,
- Figur 4: ein schematisches Blockdiagramm eines weiteren exemplarischen Systems zum Ausstellen eines digitalen verifizierbaren Credentials,
- Figur 5: ein schematisches Flussdiagramm eines weiteren exemplarischen Verfahrens zum Ausstellen eines digitalen verifizierbaren Credentials,
- Figur 6: ein schematisches Blockdiagramm eines weiteren exemplarischen Systems zum Ausstellen eines digitalen verifizierbaren Credentials,
- Figur 7: ein schematisches Flussdiagramm eines weiteren exemplarischen Verfahrens zum Ausstellen eines digitalen verifizierbaren Credentials,
- Figur 8: ein schematisches Flussdiagramm eines exemplarischen Verfahrens zum Verwenden eines digitalen verifizierbaren Credentials, und
- Figur 9: ein schematisches Blockdiagramm eines exemplarischen Systems zum Ausstellen eines digitalen verifizierbaren Credentials.

Elemente der nachfolgenden Ausführungsformen, die einander entsprechen, werden mit denselben Bezugszeichen gekennzeichnet.

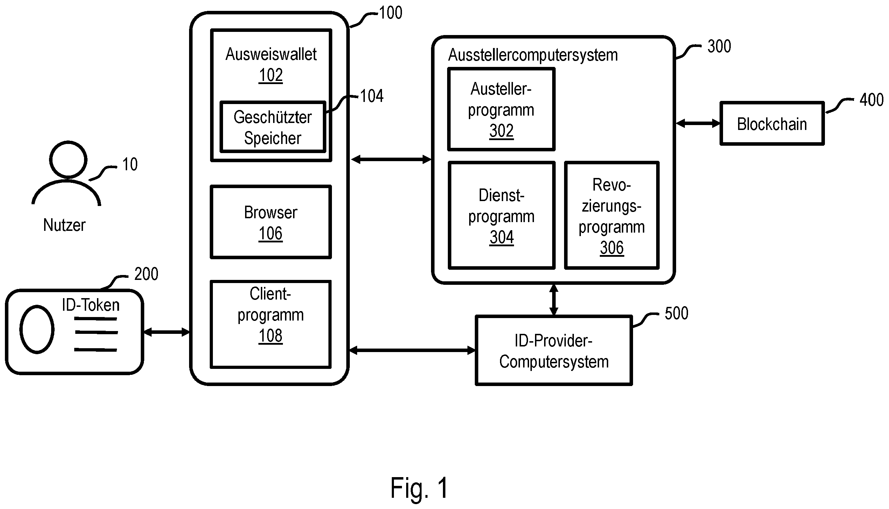

Figur 1 zeigt ein exemplarisches System 101, welches konfiguriert ist zum Bereitstellen digitaler verifizierbarer Credentials mit Nutzerattributen, welche aus einem ID-Token 200 stammen. Das System umfasst ein mobiles Endgerät, auf welchem eine Ausweiswallet 102 mit einem geschützten Speicherbereich 104 zum sicheren Abspeichern digitaler verifizierbarer Credentials installiert ist. Ferner sind auf dem mobilen Endgerät ein Browser 106 sowie ein Client-Programm 108 zum Auslesen des ID-Tokens 200 installiert. Ferner umfasst das Computersystem 300 ein Ausstellerprogramm 302 zum Ausstellen digitaler verifizierbarer Credentials sowie ein Dienstprogramm 304 (eService) zum Initialisieren eines Auslesens aus dem ID-Token 200. Ferner stellt das Ausstellerdienstprogramm einen Revozierungsdienst 306 zum Revozieren ausgestellter digitaler verifizierbarer Credentials bereit. Zudem verfügt das System 100 über eine Blockchain 400 einer SSI-Infrastruktur, in welcher dafür digitale verifizierbare Credentials sowie öffentliche kryptografische Schlüssel hinterlegt sind, welche Ausstellern verifizierbarer Credentials zugeordnet sind. Schließlich umfasst das System 100 neben dem ID-Token 200, aus welchem die Nutzerattribute zum Erstellen des digitalen verifizierbaren Credentials ausgelesen werden, einen ID-Provider-Computersystem 500 eines ID-Provider-Dienstes. Der ID-Server verfügt über Berechtigungsnachweise, welches es ihm ermöglichen, Nutzerattribute aus dem ID-Token 200 auszulesen.

Das Aussteller-Dienstcomputersystem 300 verwendet den ID-Provider-Computersystem 500 zum Auslesen von Nutzerattributen aus dem ID-Token 200. Das Auslesen von Nutzerattributen aus dem ID-Token erfolgt unter Vermittlung des ID-Client-Programms 108 des mobilen Endgeräts 100. Der ID-Provider-Computersystem 500 stellt dem Aussteller-Dienstcomputersystem 300 die ausgelesenen Nutzerattribute zur Verfügung. Beispielsweise sind die von dem ID-Provider-Computersystem 500 bereitgestellten ausgelesenen Nutzerattribute mit einem Signaturschlüssel des Servers signiert, womit deren Authentizität nachgewiesen wird. Das Ausstellercomputersystem 300 verwendet die ausgelesenen Nutzerattribute zum Erstellen eines digitalen verifizierbaren Credentials, welches das Ausstellercomputersystem mit einem Signaturschlüssel signiert und über einen verschlüsselten Kommunikationskanal an die Ausweiswallet 102 des mobilen Endgeräts sendet. Der verschlüsselte Kommunikationskanal zwischen Ausweiswallet 102 und dem Ausstellerprogramm 302 des Ausstellercomputersystems 300 setzt eine gegenseitige Authentisierung zwischen der Ausweiswallet 102 und dem Ausstellerprogramm 302 voraus.

Bei dem Dienst zum Ausstellen digitaler verifizierbarer Credentials, welche Computersystem 300 bereitstellt, handelt es sich um einen Ausstellerdienst einer SSI-Infrastruktur. Die von dem Ausstellerdienst verwendete SSI-Infrastruktur umfasst beispielsweise die Blockchain 400. Die Blockchain 400 stellt beispielsweise Datenschemata zum Ausstellen digitaler verifizierbarer Credentials bereit. Diese Datenschemata beschreiben den strukturellen Aufbau der entsprechend digitaler verifizierbarer Credentials. Ferner sind in der Blockchain 400 öffentliche kryptografische Schlüssel von Ausstellern der SSI-Infrastruktur hinterlegt. Bei dieser Blockchain 400 handelt es sich beispielsweise um eine öffentliche genehmigungspflichtige Blockchain, bei welcher Schreibzugriffe beschränkt sind, während Lesezugriffe für jeden möglich sind. Somit ermöglicht es die Blockchain 400, ein digitales verifizierbares Credential zu verifizieren. Hierzu erfolgt ein Lesezugriff auf die Blockchain 400 und beispielsweise werden das für das entsprechende Credential hinterlegte Datenschema sowie der öffentliche kryptografische Schlüssel des Ausstellers des zu verifizierenden Credentials ausgelesen. Unter Verwendung des entsprechenden Datenschemas kann geprüft werden, ob das vorliegende digitale verifizierbare Credential die hinterlegte Struktur aufweist sowie alle für eine erfolgreiche Verifizierung notwendigen Datentypen umfasst. Beispielsweise umfassen die Datenschemata Angaben zu für eine Verifizierung notwendigen Datentypen, z.B. zu bestimmten Typen von Nutzerattributen, welche in dem ID-Token 200 hinterlegt sind. Ferner kann der hinterlegte öffentliche kryptografische Schlüssel des Ausstellers dazu verwendet werden, die Signatur des digitalen verifizierbaren Credentials zu prüfen.

Darüber hinaus können in der Blockchain 400 beispielsweise Revozierungshinweise hinterlegt werden, welche über eine Revozierung eines ausgestellten digitalen verifizierbaren Credentials informieren. Im Zuge eines Verifizierens eines vorliegenden digitalen verifizierbaren Credentials kann unter Verwendung der Blockchain 400 geprüft werden, ob für das entsprechende Credential ein Revozierungseintrag in der Blockchain hinterlegt ist. Ist in der Blockchain ein Revozierungseintrag hinterlegt, d.h. ist das entsprechende Credential revoziert, so fällt das Ergebnis einer Verifizierung des entsprechenden Credentials negativ aus. Schließlich können in der Blockchain 400 Parameter hinterlegt sein zum Authentifizieren von Kommunikationsteilnehmern. Beispielsweise können basierend auf den entsprechenden Authentifizierungsinformationen die Ausweiswallet 102 und das Ausstellerprogramm 302 im Zuge des Aufbaus des verschlüsselten Kommunikationskanals initiiert werden.

Ist das digital verifizierbares Credential ausgestellt und sicher in der Ausweiswallet 102 abgespeichert, kann der Nutzer 10 das entsprechende digitale verifizierbare Credential zum Ausweisen verwenden. Hierbei benötigt der Nutzer 10 den ID-Token 200 nicht mehr. Vielmehr reicht das mobile Endgerät 100, beispielsweise ein Smartphone, hierfür aus. Mit der auf dem mobilen Endgerät 100 installierten Ausweiswallet und den in der Ausweiswallet gespeicherten digitalen verifizierbaren Credentials kann sich der Nutzer 10 gegenüber beliebigen anderen Entitäten ausweisen. Dies funktioniert insbesondere digital, indem das mobile Endgerät 100, falls dies notwendig ist, ein passendes digitales verifizierbares Credential aus der Ausweiswallet 102 auswählt und der entsprechenden Entität zusendet. Die empfangende Entität, d. h. ein Prüfer, kann das empfangene digitale verifizierbare Credential unter Verwendung der Blockchain 400 verifizieren. Hierzu prüft der Prüfer beispielsweise in der oben beschriebenen Art und Weise unter Verwendung der in der Blockchain 400 enthaltenen Informationen, wie etwa dem Datenschema, dem öffentlichen kryptografischen Schlüssel und/oder Hinweisen, ob das vorgelegte digitale verifizierbare Credential valide ist. Ist die Verifizierung erfolgreich, so wird das digitale verifizierbare Credential als authentisch anerkannt und der Nutzer 10 gilt als authentifiziert basierend auf den von den digitalen verifizierbaren Credentials bereitgestellten Nutzerattributen, die aus dem ID-Token 200 stammen.

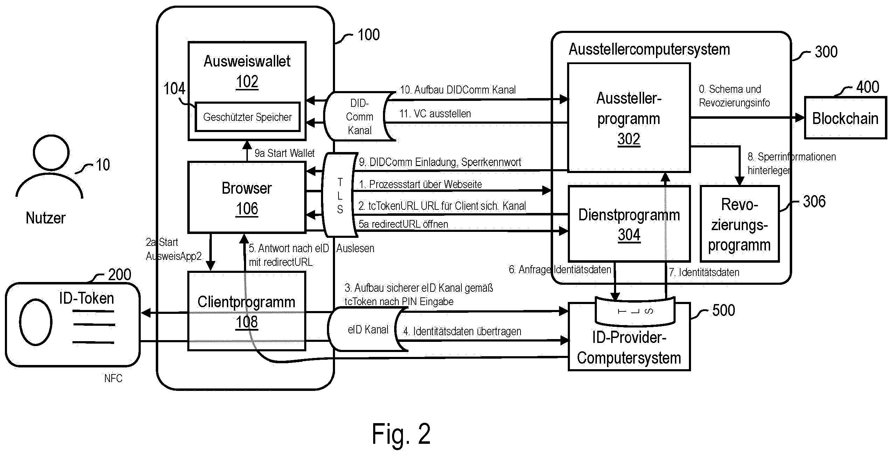

Figur 2 zeigt ein exemplarisches Flussdiagramm eines Verfahrens zum Auslesen von Nutzerattributen aus dem ID-Token 200 unter Verwendung des ID-Provider-Computersystems 500 eines ID-Provider-Dienstes sowie eines Bereitstellens eines digitalen verifizierbaren Credentials mit den ausgelesenen Nutzerattributen durch das Ausstellercomputersystem 300 eines Ausstellerdienstes einer SSI-Infrastruktur. Das System 101 zum Ausführen des Verfahrens ist das System 101 aus Figur 1. Initial sendet das Ausstellercomputersystem 300 des Ausstellerdienstes an die Blockchain 400 Identitätsdaten, welche den Ausstellerdienst identifizieren. Die entsprechenden Identitätsdaten umfassen beispielsweise einen öffentlichen kryptografischen Schlüssel des Ausstellerdienstes. Ferner sind beispielsweise Datenschemata von digitalen verifizierbaren Credentials hinterlegt, welche der Ausstellerdienst ausstellt. Die entsprechenden Datenschemata werden beispielsweise zusammen mit Definitionen von Credentials hinterlegt, welche die Typen von Credentials definieren, welche der Ausstellerdienst ausstellt. Schließlich werden in der Blockchain 400 ferner beispielsweise Revozierungsinformationen hinterlegt, welche definieren, wie von dem Ausstellerdienst ausgestellte Credentials revoziert werden.

In Schritt 1 wird der Prozess zum Ausstellen eines digitalen verifizierbaren Credentials für den Nutzer 10 unter Verwendung des mobilen Endgeräts 100 gestartet. Hierzu ruft der Nutzer 10 beispielsweise unter Verwendung des Browsers 106 des mobilen Endgeräts 100 eine Webseite des Ausstellerdienstes auf. Der Aufruf kann beispielsweise ein Zustimmen des Nutzers 10 zu Datenschutz- und Nutzungsbedingungen des Ausstellerdienstes voraussetzen. Alternativerweise kann dieser Prozess auch durch einen von der Ausweiswallet bereitgestellten Link gestartet werden. Klickt der Nutzer auf den entsprechenden Link, öffnet sich die Webseite des Ausstellerdienstes in dem Browser 106 des mobilen Endgeräts 100.

In Schritt 2 startet der Nutzer 10 den ID-Provider-Prozess, d. h. das Auslesen von Nutzerattributen aus dem ID-Token 200 durch das ID-Provider-Computersystem 500 über das mobile Endgerät 100. Der Nutzer startet den ID-Provider-Prozess gegenüber dem Ausstellerdienst, d. h. dem Ausstellercomputersystem, welches mit dem Bereitstellen einer URL antwortet. Unter der entsprechenden URL sind Parameter hinterlegt zum Aufbau eines verschlüsselten Kommunikationskanals zwischen dem Client-Programm 108 des mobilen Endgeräts 100 und dem ID-Provider-Computersystem 500. Der Webbrowser ruft die entsprechende URL auf und stellt die darunter bereitgestellten Parameter dem Client-Programm 108 zum Aufbau des verschlüsselten Kommunikationskanals bereit. Das Client-Programm 108 verwendet die unter der URL bereitgestellten Parameter zum Initiieren des verschlüsselten Kommunikationskanals mit dem ID-Provider-Computersystem 500. In Schritt 2a wertet der Browser 106 die Antwort des ID-Provider-Computersystems 500 aus und ruft das Client-Programm 108 auf.

In Schritt 3 gibt das Client-Programm 108 auf einer Anzeigevorrichtung des mobilen Endgeräts 100, beispielsweise auf einem Display, dem Auslesenden bzw. Ausleseberechtigten, d. h. dem ID-Provider-Dienst, die von dem ID-Provider-Dienst angeforderten Nutzerattribute und/oder den Verwendungszweck der auszulesenden Nutzerattribute an. Der Nutzer 10 kann die angezeigten Informationen prüfen und für den Fall, dass er diese akzeptiert, eine PIN in das mobile Endgerät 100 über eine Eingabevorrichtung, beispielsweise ein als Touchdisplay konfiguriertes Display, eingeben. Die entsprechende PIN wird dem Client-Programm 108 an den ID-Token 200 weitergeleitet zur Verifikation. Ist die eingegebene PIN korrekt, so stellt das Client-Programm 108 eine Verbindung zwischen dem ID-Token 200 und dem ID-Provider-Computersystem 500 in Form eines Ende-zu-Ende-verschlüsselten Kommunikationskanals her. Über diesen verschlüsselten Kommunikationskanal können sich der ID-Token und das ID-Provider-Computersystem gegenseitig authentifizieren. Ist die gegenseitige Authentifizierung erfolgreich und kann das ID-Provider-Computersystem eine Zugriffsberechtigung zum Auslesen von Nutzerattributen aus dem ID-Token 200 nachweisen, so erhält das ID-Provider-Computersystem 500 einen Lesezugriff auf das ID-Token 200. Bei dem entsprechenden Berechtigungsnachweis kann es sich beispielsweise um ein Lesezertifikat des ID-Provider-Dienstes handeln.

In Schritt 4 werden über den verschlüsselten Kommunikationskanal zwischen ID-Token 200 und ID-Provider-Computersystem 500 die angeforderten Nutzerattribute von dem ID-Token 200 an das ID-Provider-Computersystem 500 übertragen.

In Schritt 5 antwortet das ID-Provider-Computersystem 500 dem Client-Programm 108 auf ein erfolgreiches Auslesen der Nutzerattribute hin mit einer Redirect-URL. Diese Redirect-URL umfasst einen Identifikator entsprechenden ID-Provider-Sitzung, im Zuge derer die Nutzerattribute ausgelesen wurden. Das Client-Programm 108 gibt die Redirect-URL an den Browser weiter. In Schritt 5a ruft der Browser 106 die Redirect-URL auf und gibt dem Ausstellercomputersystem 300 dadurch Rückmeldung, dass der Ausleseprozess mit der angegebenen ID-Provider-Sitzung erfolgreich war und dem ID-Provider-Computersystem 500 die auszulesenden Nutzerattribute aus dem ID-Token 200 vorliegen.

In Schritt 6 fragt das Ausstellercomputersystem 300 auf das Aufrufen der Redirect-URL hin bei dem ID-Provider-Computersystem 500 die ausgelesenen Nutzerattribute an. Hierzu wird zwischen dem Ausstellercomputersystem 300 und dem ID-Provider-Computersystem 500 beispielsweise ein verschlüsselter Kommunikationskanal, etwa ein TLS-Kanal, aufgebaut. Das Ausstellercomputersystem 300 fragt die ausgelesenen Nutzerattribute beispielsweise unter Verwendung des Dienstprogramms 304 von dem ID-Provider-Computersystem 500 an.

In Schritt 7 sendet das ID-Provider-Computersystem 500 in Antwort auf die Anfrage des Ausstellercomputersystems 300 die ausgelesenen Nutzerattribute an das Ausstellercomputersystem 300 über den verschlüsselten Kommunikationskanal zwischen dem ID-Provider-Computersystem 500 und dem Ausstellercomputersystem 300. Die ausgelesenen Nutzerattribute sind beispielsweise durch das ID-Provider-Computersystem 500 mit einem Signaturschlüssel des ID-Provider-Computersystems 500 signiert. Durch die entsprechende Signatur wird die Authentizität der ausgelesenen Nutzerattribute durch das ID-Provider-Computersystem 500 bestätigt.

In Schritt 8 erzeugt das Ausstellercomputersystem 300 bzw. das Ausstellerprogramm 302, welches auf dem Ausstellercomputersystem 300 installiert ist, ein Sperrkennwort zum Revozieren des auszustellenden digitalen verifizierbaren Credentials. Das Sperrkennwort wird zusammen mit weiteren Sperrinformationen in einem Revozierungsdienst 306 des Ausstellercomputersystems 300 hinterlegt. Die Sperrinformationen umfassen ferner beispielsweise einen Hash einer Restricted ID des ID-Tokens. Hierbei werden insbesondere beispielsweise keine personenidentifizierenden Informationen in dem Revozierungsdienst gespeichert.

In Schritt 9 erzeugt das Ausstellerprogramm 302 des Ausstellercomputersystems 300 eine Verbindungsanfrage zum Aufbau eines verschlüsselten Kommunikationskanals zwischen dem Ausstellerprogramm 302 des Computersystems 300 und der Ausweiswallet 102 des mobilen Endgeräts 100. Diese Verbindungsanfrage zeigt das Ausstellerprogramm dem Nutzer 10 beispielsweise durch eine Aktualisierung der in dem Browser 106 gezeigten Webseite an. Zusätzlich wird dem Nutzer 10 das Sperrkennwort angezeigt. In Schritt 9a kann der Nutzer 10 die im Browser angezeigte Verbindungsanfrage mittels eines Buttons in seiner Ausweiswallet 102 öffnen, d. h. die Ausweiswallet 102 kann den entsprechenden verschlüsselten Kommunikationskanal mit dem Ausstellerprogramm 302 aufbauen. Beispielsweise kann die Verbindungsanfrage auch in Form eines maschinenlesbaren Codes, beispielsweise eines QR-Codes, in dem Browser angezeigt werden.

In Schritt 10 zeigt die Ausweiswallet 102 dem Nutzer 10 Details der über den Browser empfangenen Verbindungsanfrage an. Der Nutzer kann diese Verbindungsanfrage bestätigen, woraufhin die Ausweiswallet 102 den verschlüsselten Kommunikationskanal mit dem Ausstellerprogramm 302 aufbaut. Bei dem entsprechenden verschlüsselten Kommunikationskanal handelt es sich beispielsweise um einen DIDComm-Kanal. In diesem Fall handelt es sich bei der Verbindungsanfrage um eine DIDComm-Einladung. Im Zuge des Aufbaus des verschlüsselten Kommunikationskanals zwischen der Ausweiswallet 102 und dem Ausstellerprogramm 302 erfolgt eine gegenseitige Authentifizierung der Ausweiswallet 102 gegenüber dem Ausstellerprogramm 302 sowie eine Authentisierung des ID-Provider-Programms gegenüber der Ausweiswallet 102.

Ist der verschlüsselte Kommunikationskanal zwischen der Ausweiswallet 102 und Ausstellerprogramm 302 aufgebaut, sendet das Ausstellerprogramm 302 in Schritt 11 über den verschlüsselten Kommunikationskanal das erstellte digitale verifizierbare Credential mit den ausgelesenen Nutzerattributen an die Ausweiswallet 102. Der Nutzer bekommt beispielsweise das empfangene digitale verifizierbare Credential angezeigt und kann dieses annehmen. Auf eine entsprechende Annahme hin wird das digitale verifizierbare Credential in dem geschützten Speicherbereich 104 der Ausweiswallet 102 des mobilen Endgeräts 100 gespeichert. Abschließend werden beispielsweise die ausgelesenen Nutzerattribute auf dem Ausstellercomputersystem gelöscht. Ebenso werden auf dem ID-Provider-Computersystem die ausgelesenen Nutzerattribute gelöscht.

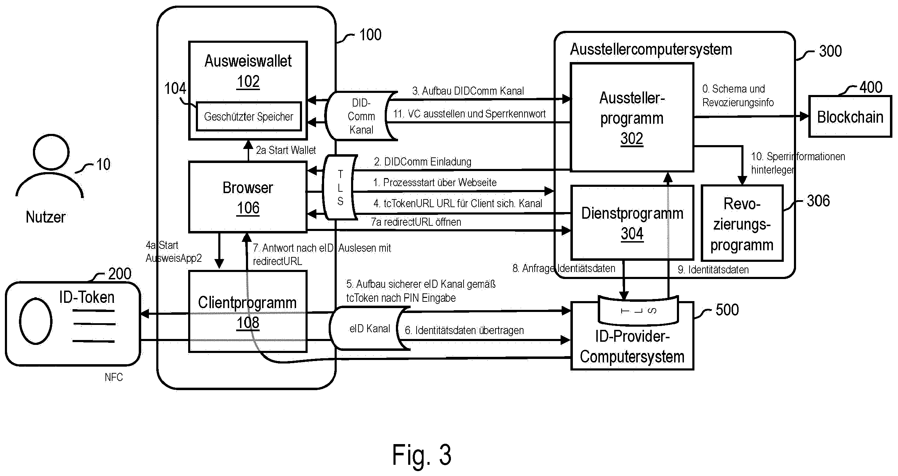

Figur 3 zeigt ein Flussdiagramm eines weiteren exemplarischen Verfahrens zum Auslesen von Nutzerattributen aus dem ID-Token 200 unter Verwendung des ID-Provider-Computersystems 500 und zum Ausstellen eines digitalen verifizierbaren Credentials mit den ausgelesenen Nutzerattributen durch das Ausstellercomputersystem 300. Das hierzu verwendete System 101 entspricht beispielsweise dem in Figur 1 gezeigten System 101, welches bereits für das Verfahren gemäß Figur 2 verwendet wurde. Im Falle des Verfahrens gemäß Figur 3 erfolgt der Aufbau des verschlüsselten Kommunikationskanals zwischen dem der Ausweiswallet bzw. dem Wallet-Programm 102 des mobilen Endgeräts 100 und des Ausstellerprogramms 302 des Ausstellercomputersystems 300 vor dem Aufbau des verschlüsselten Kommunikationskanals zum Auslesen der Nutzerattribute aus dem ID-Token 200 durch das ID-Provider-Computersystem 500. Diese alternative Implementierung kann den Vorteil haben, dass dadurch ein Datendiebstahl erschwert wird. Im Zuge des Aufbaus des verschlüsselten Kommunikationskanals zwischen dem Wallet-Programm 102 und dem Ausstellerprogramm 302 erfolgt eine gegenseitige Authentifizierung von Ausweiswallet und Ausstellerprogramm 302. Somit weiß das Ausstellerprogramm 302 bereits zu diesem Zeitpunkt, mit wem es kommuniziert und an wen das ausgestellte digitale verifizierbare Credential am Ende des Verfahrens gesendet wird. Somit wird verhindert, dass ein erzeugtes digitales verifizierbares Credential nach dem Erstellen umgeleitet wird, indem der verschlüsselte Kommunikationskanal zum einer andern Ausweiswallet aufgebaut wird als der Ausweiswallet 102 des mobilen Endgeräts 100, über welches der Nutzer den Prozess zuvor initialisiert hat. Durch den Aufbau des verschlüsselten Kommunikationskanals zwischen Wallet 102 und dem Ausstellerprogramm 302 zu Beginn des Verfahrens, werden die entsprechenden Verfahrensbeteiligten authentifiziert und festgelegt. Erst nach diesem Festlegen erfolgt eine Freigabe des Auslesens von Nutzerattributen aus dem ID-Token 200 durch den Nutzer 10. Somit kann sichergestellt werden, dass das Wallet-Programm 102, an welches am Ende das digitale verifizierbare Credential gesendet wird, um eine Ausweiswallet 102 handelt, welche von dem Nutzer 10 zum Empfang des auszustellenden digitalen verifizierbaren Credentials autorisiert ist bzw. dass das Einbringen mit Zustimmung des Nutzers 10 erfolgt.

Initial sendet das Ausstellercomputersystem 300 des Ausstellerdienstes an die Blockchain 400 Identitätsdaten, welche den Ausstellerdienst identifizieren. Die entsprechenden Identitätsdaten umfassen beispielsweise einen öffentlichen kryptografischen Schlüssel des Ausstellerdienstes. Ferner sind beispielsweise Datenschemata von digitalen verifizierbaren Credentials hinterlegt, welche der Ausstellerdienst ausstellt. Die entsprechenden Datenschemata werden beispielsweise zusammen mit Definitionen von Credentials hinterlegt, welche die Typen von Credentials definieren, welche der Ausstellerdienst ausstellt. Schließlich werden in der Blockchain 400 ferner beispielsweise Revozierungsinformationen hinterlegt, welche definieren, wie von dem Ausstellerdienst ausgestellte Credentials revoziert werden.

In Schritt 1 wird der Prozess zum Ausstellen eines digitalen verifizierbaren Credentials für den Nutzer 10 unter Verwendung des mobilen Endgeräts 100 gestartet. Hierzu ruft der Nutzer 10 beispielsweise unter Verwendung des Browsers 106 des mobilen Endgeräts 100 eine Webseite des Ausstellerdienstes auf. Der Aufruf kann beispielsweise ein Zustimmen des Nutzers 10 zu Datenschutz- und Nutzungsbedingungen des Ausstellerdienstes voraussetzen. Alternativerweise kann dieser Prozess auch durch einen von der Ausweiswallet bereitgestellten Link gestartet werden. Klickt der Nutzer auf den entsprechenden Link, öffnet sich die Webseite des Ausstellerdienstes in dem Browser 106 des mobilen Endgeräts 100.

In Schritt 2 erzeugt das Ausstellerprogramm 302 des Ausstellercomputersystems 300 eine Verbindungsanfrage zum Aufbau eines verschlüsselten Kommunikationskanals zwischen dem Ausstellerprogramm 302 des Computersystems 300 und der Ausweiswallet 102 des mobilen Endgeräts 100. Diese Verbindungsanfrage zeigt das Ausstellerprogramm dem Nutzer 10 beispielsweise durch eine Aktualisierung der in dem Browser 106 gezeigten Webseite an. Zusätzlich wird dem Nutzer 10 das Sperrkennwort angezeigt. In Schritt 2a kann der Nutzer 10 die im Browser angezeigte Verbindungsanfrage mittels eines Buttons in seiner Ausweiswallet 102 öffnen, d. h. die Ausweiswallet 102 kann den entsprechenden verschlüsselten Kommunikationskanal mit dem Ausstellerprogramm 302 aufbauen. Beispielsweise kann die Verbindungsanfrage auch in Form eines maschinenlesbaren Codes, beispielsweise eines QR-Codes, in dem Browser angezeigt werden.

In Schritt 3 zeigt die Ausweiswallet 102 dem Nutzer 10 Details der über den Browser empfangenen Verbindungsanfrage an. Der Nutzer kann diese Verbindungsanfrage bestätigen, woraufhin die Ausweiswallet 102 den verschlüsselten Kommunikationskanal mit dem ID-Provider-Programm 302 aufbaut. Bei dem entsprechenden verschlüsselten Kommunikationskanal handelt es sich beispielsweise um einen DIDComm-Kanal. In diesem Fall handelt es sich bei der Verbindungsanfrage um eine DIDComm-Einladung. Im Zuge des Aufbaus des verschlüsselten Kommunikationskanals zwischen der Ausweiswallet 102 und dem Ausstellerprogramm 302 erfolgt eine gegenseitige Authentifizierung der Ausweiswallet 102 gegenüber dem Ausstellerprogramm 302 sowie eine Authentisierung des ID-Provider-Programms gegenüber der Ausweiswallet 102. Der Nutzer kann dadurch beispielsweise prüfen, ob er mit dem richtigen Aussteller verbunden ist.

In Schritt 4 startet der Nutzer 10 den ID-Provider-Prozess, d. h. das Auslesen von Nutzerattributen aus dem ID-Token 200 durch das ID-Provider-Computersystem 500 über das mobile Endgerät 100. Der Nutzer startet den ID-Provider-Prozess gegenüber dem Ausstellerdienst, d. h. dem Ausstellercomputersystem, welches mit dem Bereitstellen einer URL antwortet. Unter der entsprechenden URL sind Parameter hinterlegt zum Aufbau eines verschlüsselten Kommunikationskanals zwischen dem Client-Programm 108 des mobilen Endgeräts 100 und dem ID-Provider-Computersystem 500. Der Webbrowser ruft die entsprechende URL auf und stellt die darunter bereitgestellten Parameter dem Client-Programm 108 zum Aufbau des verschlüsselten Kommunikationskanals bereit. Das Client-Programm 108 verwendet die unter der URL bereitgestellten Parameter zum Initiieren des verschlüsselten Kommunikationskanals mit dem ID-Provider-Computersystem 500. In Schritt 4a wertet der Browser 106 die Antwort des ID-Provider-Computersystems 500 aus und ruft das Client-Programm 108 auf.

In Schritt 5 gibt das Client-Programm 108 auf einer Anzeigevorrichtung des mobilen Endgeräts 100, beispielsweise auf einem Display, dem Auslesenden bzw. Ausleseberechtigten, d. h. dem ID-Provider-Dienst, die von dem ID-Provider-Dienst angeforderten Nutzerattribute und/oder den Verwendungszweck der auszulesenden Nutzerattribute an. Der Nutzer 10 kann die angezeigten Informationen prüfen und für den Fall, dass er diese akzeptiert, eine PIN in das mobile Endgerät 100 über eine Eingabevorrichtung, beispielsweise ein als Touchdisplay konfiguriertes Display, eingeben. Die entsprechende PIN wird dem Client-Programm 108 an den ID-Token 200 weitergeleitet zur Verifikation. Ist die eingegebene PIN korrekt, so stellt das Client-Programm 108 eine Verbindung zwischen dem ID-Token 200 und dem ID-Provider-Computersystem 500 in Form eines Ende-zu-Ende-verschlüsselten Kommunikationskanals her. Über diesen verschlüsselten Kommunikationskanal können sich der ID-Token und das ID-Provider-Computersystem gegenseitig authentifizieren. Ist die gegenseitige Authentifizierung erfolgreich und kann das ID-Provider-Computersystem eine Zugriffsberechtigung zum Auslesen von Nutzerattributen aus dem ID-Token 200 nachweisen, so erhält das ID-Provider-Computersystem 500 einen Lesezugriff auf das ID-Token 200. Bei dem entsprechenden Berechtigungsnachweis kann es sich beispielsweise um ein Lesezertifikat des ID-Provider-Dienstes handeln.

In Schritt 6 werden über den verschlüsselten Kommunikationskanal zwischen ID-Token 200 und ID-Provider-Computersystem 500 die angeforderten Nutzerattribute von dem ID-Token 200 an das ID-Provider-Computersystem 500 übertragen.

In Schritt 7 antwortet das ID-Provider-Computersystem 500 dem Client-Programm 108 auf ein erfolgreiches Auslesen der Nutzerattribute hin mit einer Redirect-URL. Diese Redirect-URL umfasst einen Identifikator entsprechenden ID-Provider-Sitzung, im Zuge derer die Nutzerattribute ausgelesen wurden. Das Client-Programm 108 gibt die Redirect-URL an den Browser weiter. In Schritt 5a ruft der Browser 106 die Redirect-URL auf und gibt dem Ausstellercomputersystem 300 dadurch Rückmeldung, dass der Ausleseprozess mit der angegebenen ID-Provider-Sitzung erfolgreich war und dem ID-Provider-Computersystem 500 die auszulesenden Nutzerattribute aus dem ID-Token 200 vorliegen.

In Schritt 8 fragt das Ausstellercomputersystem 300 auf das Aufrufen der Redirect-URL hin bei dem ID-Provider-Computersystem 500 die ausgelesenen Nutzerattribute an. Hierzu wird zwischen dem Ausstellercomputersystem 300 und dem ID-Provider-Computersystem 500 beispielsweise ein verschlüsselter Kommunikationskanal, etwa ein TLS-Kanal, aufgebaut. Das Ausstellercomputersystem 300 fragt die ausgelesenen Nutzerattribute beispielsweise unter Verwendung des Dienstprogramms 304 von dem ID-Provider-Computersystem 500 an.

In Schritt 9 sendet das ID-Provider-Computersystem 500 in Antwort auf die Anfrage des Ausstellercomputersystems 300 die ausgelesenen Nutzerattribute an das Ausstellercomputersystem 300 über den verschlüsselten Kommunikationskanal zwischen dem ID-Provider-Computersystem 500 und dem Ausstellercomputersystem 300. Die ausgelesenen Nutzerattribute sind beispielsweise durch das ID-Provider-Computersystem 500 mit einem Signaturschlüssel des ID-Provider-Computersystems 500 signiert. Durch die entsprechende Signatur wird die Authentizität der ausgelesenen Nutzerattribute durch das ID-Provider-Computersystem 500 bestätigt.

In Schritt 10 erzeugt das Ausstellercomputersystem 300 bzw. das Ausstellerprogramm 302, welches auf dem Ausstellercomputersystem 300 installiert ist, ein Sperrkennwort zum Revozieren des auszustellenden digitalen verifizierbaren Credentials. Das Sperrkennwort wird zusammen mit weiteren Sperrinformationen in einem Revozierungsdienst 306 des Ausstellercomputersystems 300 hinterlegt. Die Sperrinformationen umfassen ferner beispielsweise einen Hash einer Restricted ID des ID-Tokens. Hierbei werden insbesondere beispielsweise keine personenidentifizierenden Informationen in dem Revozierungsdienst gespeichert.

In Schritt 11 sendet das Ausstellerprogramm 302 über den verschlüsselten Kommunikationskanal das erstellte digitale verifizierbare Credential mit den ausgelesenen Nutzerattributen an die Ausweiswallet 102. Der Nutzer bekommt beispielsweise das empfangene digitale verifizierbare Credential angezeigt und kann dieses annehmen. Auf eine entsprechende Annahme hin wird das digitale verifizierbare Credential in dem geschützten Speicherbereich 104 der Ausweiswallet 102 des mobilen Endgeräts 100 gespeichert. Abschließend werden beispielsweise die ausgelesenen Nutzerattribute auf dem Ausstellercomputersystem gelöscht. Ebenso werden auf dem ID-Provider-Computersystem die ausgelesenen Nutzerattribute gelöscht.

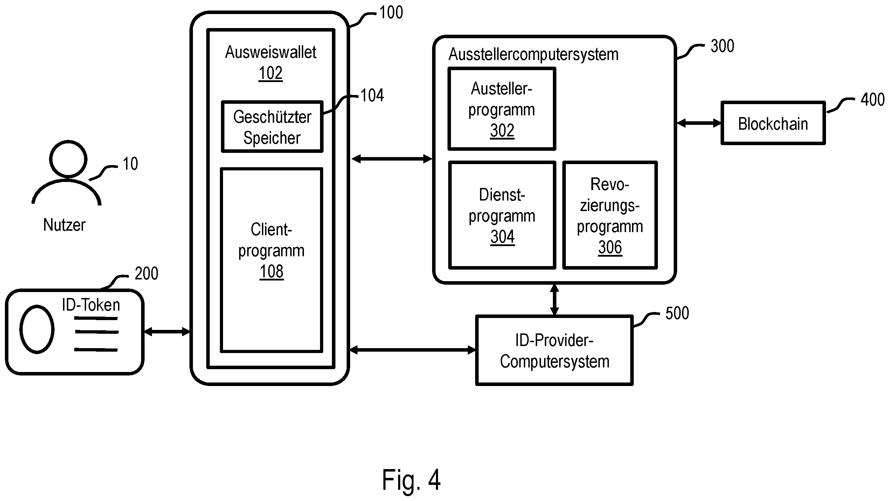

Figur 4 zeigt ein System 101 zum Ausstellen eines digitalen verifizierbaren Credentials unter Verwendung von Nutzerattributen, welche aus einem ID-Token 200 ausgelesen werden. Das in Figur 4 gezeigte System 100 entspricht im Wesentlichen dem in Figur 1 gezeigten System 100. Das in Figur 4 gezeigte System unterscheidet sich von dem in Figur 1 gezeigten System 100 lediglich dadurch, dass das Client-Programm 108 nunmehr von der Ausweiswallet 102 umfasst ist. Ferner wird im Falle dieser Ausgestaltung des Systems 101 kein Browser für das Ausführen des Verfahrens verwendet. Das mobile Endgerät 100 kann selbstverständlicher Weise einen Browser umfassen, dieser wird für das vorliegende Verfahren jedoch nicht verwendet. Somit wäre das entsprechende Verfahren auch ausführbar durch ein mobiles Endgerät 100, welches über keinen Browser verfügt. Ein in die Ausweiswallet 102 integriertes Client-Programm 108 zum Vermitteln eines Lesezugriffs auf ein ID-Token 200 durch das ID-Provider-Computersystem 500 kann den Vorteil haben, dass der Nutzer keine Komponente in Ergänzung zu der Ausweiswallet 102 auf seinem mobilen Endgerät 100 installieren muss. Das entsprechende Client-Programm ist bereits vorhanden und wird von der Ausweiswallet 102 bereitgestellt. Ferner kann dadurch die Sicherheit erhöht werden, da die Kommunikation zwischen unterschiedlichen Programmen, welche unabhängig voneinander installiert werden, über das mobile Endgerät 100 erfolgt. Ferner kann der Verzicht auf eine Verwendung eines Browsers den Vorteil haben, dass die Sicherheit dadurch erhöht wird, dass kein Kontextwechsel über den Browser zwischen dem Client-Programm und der Ausweiswallet 102 erfolgt.

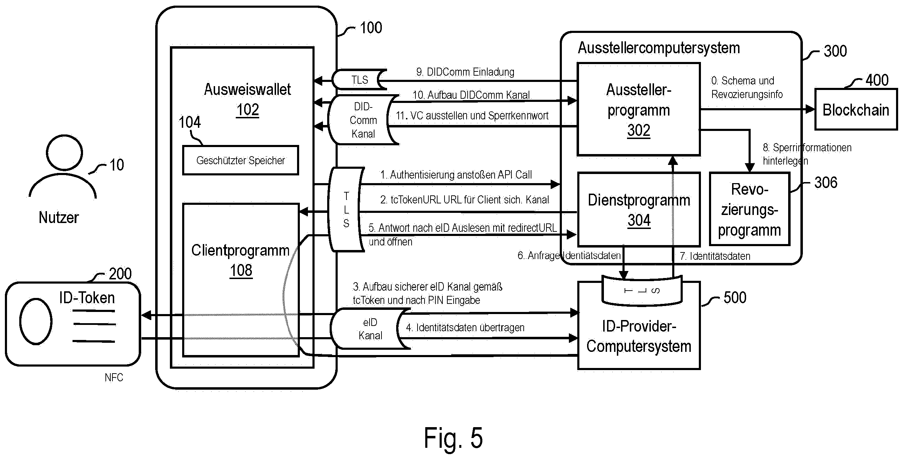

Figur 5 zeigt ein Flussdiagramm eines exemplarischen Verfahrens zum Auslesen von Nutzerattributen aus einem ID-Token 200 durch ein ID-Provider-Computersystem 500 und eine Verwendung der ausgelesenen Nutzerattribute durch ein Ausstellercomputersystem 300 zum Erzeugen eines digitalen verifizierbaren Credentials für eine Ausweiswallet 102 auf einem mobilen Endgerät 100. Für das Ausführen des Verfahrens gemäß Figur 5 wird beispielsweise das System 100 gemäß Figur 4 verwendet.

Initial sendet das Ausstellercomputersystem 300 des Ausstellerdienstes an die Blockchain 400 Identitätsdaten, welche den Ausstellerdienst identifizieren. Die entsprechenden Identitätsdaten umfassen beispielsweise einen öffentlichen kryptografischen Schlüssel des Ausstellerdienstes. Ferner sind beispielsweise Datenschemata von digitalen verifizierbaren Credentials hinterlegt, welche der Ausstellerdienst ausstellt. Die entsprechenden Datenschemata werden beispielsweise zusammen mit Definitionen von Credentials hinterlegt, welche die Typen von Credentials definieren, welche der Ausstellerdienst ausstellt. Schließlich werden in der Blockchain 400 ferner beispielsweise Revozierungsinformationen hinterlegt, welche definieren, wie von dem Ausstellerdienst ausgestellte Credentials revoziert werden.

In Schritt 1 initiiert der Nutzer den Prozess zum Ausstellen des digitalen verifizierbaren Credentials aus der Ausweiswallet 102 heraus. Beispielsweise ruft der Nutzer die Ausweiswallet 102 auf, welche ihn auf einer Ausgabevorrichtung des mobilen Endgeräts 100, beispielsweise einem Display, einen Button zum Ausstellen eines entsprechenden digitalen verifizierbaren Credentials, z. B. "Master-ID ausstellen", anzeigt. Klickt der Nutzer 10 auf den angezeigten Button, so initiiert die Ausweiswallet einen API-Call der Ausweis-Wallet, mit welcher diese eine Ausstellanfrage an das Ausstellercomputersystem 300 sendet.

In Schritt 2 antwortet das Ausstellercomputersystem auf das initiieren des Umstellungsprozesses durch den Nutzer mit dem Bereitstellen einer URL. Unter der entsprechenden URL sind Parameter hinterlegt zum Aufbau eines verschlüsselten Kommunikationskanals zwischen dem Client-Programm 108 des mobilen Endgeräts 100 und dem ID-Provider-Computersystem 500. Die Ausweiswallet 102 ruft die entsprechende URL auf und stellt die darunter bereitgestellten Parameter dem Client-Programm 108 zum Aufbau des verschlüsselten Kommunikationskanals bereit. Das Client-Programm 108 verwendet die unter der URL bereitgestellten Parameter zum Initiieren des verschlüsselten Kommunikationskanals mit dem ID-Provider-Computersystem 500.

In Schritt 3 gibt das Client-Programm 108 auf einer Anzeigevorrichtung des mobilen Endgeräts 100, beispielsweise auf einem Display, dem Auslesenden bzw. Ausleseberechtigten, d. h. dem ID-Provider-Dienst, die von dem ID-Provider-Dienst angeforderten Nutzerattribute und/oder den Verwendungszweck der auszulesenden Nutzerattribute an. Der Nutzer 10 kann die angezeigten Informationen prüfen und für den Fall, dass er diese akzeptiert, eine PIN in das mobile Endgerät 100 über eine Eingabevorrichtung, beispielsweise ein als Touchdisplay konfiguriertes Display, eingeben. Die entsprechende PIN wird dem Client-Programm 108 an den ID-Token 200 weitergeleitet zur Verifikation. Ist die eingegebene PIN korrekt, so stellt das Client-Programm 108 eine Verbindung zwischen dem ID-Token 200 und dem ID-Provider-Computersystem 500 in Form eines Ende-zu-Ende-verschlüsselten Kommunikationskanals her. Über diesen verschlüsselten Kommunikationskanal können sich der ID-Token und das ID-Provider-Computersystem gegenseitig authentifizieren. Ist die gegenseitige Authentifizierung erfolgreich und kann das ID-Provider-Computersystem eine Zugriffsberechtigung zum Auslesen von Nutzerattributen aus dem ID-Token 200 nachweisen, so erhält das ID-Provider-Computersystem 500 einen Lesezugriff auf das ID-Token 200. Bei dem entsprechenden Berechtigungsnachweis kann es sich beispielsweise um ein Lesezertifikat des ID-Provider-Dienstes handeln.

In Schritt 4 werden über den verschlüsselten Kommunikationskanal zwischen ID-Token 200 und ID-Provider-Computersystem 500 die angeforderten Nutzerattribute von dem ID-Token 200 an das ID-Provider-Computersystem 500 übertragen.

In Schritt 5 antwortet das ID-Provider-Computersystem 500 dem Client-Programm 108 auf ein erfolgreiches Auslesen der Nutzerattribute hin mit einer Redirect-URL. Diese Redirect-URL umfasst einen Identifikator entsprechenden ID-Provider-Sitzung, im Zuge derer die Nutzerattribute ausgelesen wurden. Das Client-Programm 108 ruft den API-Endpunkt der Redirect-URL auf und gibt dem Ausstellercomputersystem 300 dadurch Rückmeldung, dass der Ausleseprozess mit der angegebenen ID-Provider-Sitzung erfolgreich war und dem ID-Provider-Computersystem 500 die auszulesenden Nutzerattribute aus dem ID-Token 200 vorliegen.

In Schritt 6 fragt das Ausstellercomputersystem 300 auf das Aufrufen der Redirect-URL hin bei dem ID-Provider-Computersystem 500 die ausgelesenen Nutzerattribute an. Hierzu wird zwischen dem Ausstellercomputersystem 300 und dem ID-Provider-Computersystem 500 beispielsweise ein verschlüsselter Kommunikationskanal, etwa ein TLS-Kanal, aufgebaut. Das Ausstellercomputersystem 300 fragt die ausgelesenen Nutzerattribute beispielsweise unter Verwendung des Dienstprogramms 304 von dem ID-Provider-Computersystem 500 an.

In Schritt 7 sendet das ID-Provider-Computersystem 500 in Antwort auf die Anfrage des Ausstellercomputersystems 300 die ausgelesenen Nutzerattribute an das Ausstellercomputersystem 300 über den verschlüsselten Kommunikationskanal zwischen dem ID-Provider-Computersystem 500 und dem Ausstellercomputersystem 300. Die ausgelesenen Nutzerattribute sind beispielsweise durch das ID-Provider-Computersystem 500 mit einem Signaturschlüssel des ID-Provider-Computersystems 500 signiert. Durch die entsprechende Signatur wird die Authentizität der ausgelesenen Nutzerattribute durch das ID-Provider-Computersystem 500 bestätigt.

In Schritt 8 erzeugt das Ausstellercomputersystem 300 bzw. das Ausstellerprogramm 302, welches auf dem Ausstellercomputersystem 300 installiert ist, ein Sperrkennwort zum Revozieren des auszustellenden digitalen verifizierbaren Credentials. Das Sperrkennwort wird zusammen mit weiteren Sperrinformationen in einem Revozierungsdienst 306 des Ausstellercomputersystems 300 hinterlegt. Die Sperrinformationen umfassen ferner beispielsweise einen Hash einer Restricted ID des ID-Tokens. Hierbei werden insbesondere beispielsweise keine personenidentifizierenden Informationen in dem Revozierungsdienst gespeichert.

In Schritt 9 erzeugt das Ausstellerprogramm 302 des Ausstellercomputersystems 300 eine Verbindungsanfrage zum Aufbau eines verschlüsselten Kommunikationskanals zwischen dem Ausstellerprogramm 302 des Computersystems 300 und der Ausweiswallet 102 des mobilen Endgeräts 100. Diese Verbindungsanfrage sendet das Ausstellercomputersystems 300 in Antwort auf den API-Call an die Ausweiswallet 102.

In Schritt 10 zeigt die Ausweiswallet 102 dem Nutzer 10 Details der empfangenen Verbindungsanfrage an. Der Nutzer kann diese Verbindungsanfrage bestätigen, woraufhin die Ausweiswallet 102 den verschlüsselten Kommunikationskanal mit dem Ausstellerprogramm 302 aufbaut. Bei dem entsprechenden verschlüsselten Kommunikationskanal handelt es sich beispielsweise um einen DIDComm-Kanal. In diesem Fall handelt es sich bei der Verbindungsanfrage um eine DIDComm-Einladung. Im Zuge des Aufbaus des verschlüsselten Kommunikationskanals zwischen der Ausweiswallet 102 und dem Ausstellercomputersystem 302 erfolgt eine gegenseitige Authentifizierung der Ausweiswallet 102 gegenüber dem Ausstellerprogramm 302 sowie eine Authentisierung des ID-Provider-Programms gegenüber der Ausweiswallet 102.

Ist der verschlüsselte Kommunikationskanal zwischen der Ausweiswallet 102 und Ausstellerprogramm 302 aufgebaut, sendet das Ausstellerprogramm 302 in Schritt 11 über den verschlüsselten Kommunikationskanal das erstellte digitale verifizierbare Credential mit den ausgelesenen Nutzerattributen an die Ausweiswallet 102. Der Nutzer bekommt beispielsweise das empfangene digitale verifizierbare Credential angezeigt und kann dieses annehmen. Zusätzlich wird beispielsweise das Sperrkennwort an die Ausweiswallet 102 übermittelt. Auf eine entsprechende Annahme hin wird das digitale verifizierbare Credential in dem geschützten Speicherbereich 104 der Ausweiswallet 102 des mobilen Endgeräts 100 gespeichert. Abschließend werden beispielsweise die ausgelesenen Nutzerattribute auf dem Ausstellercomputersystem gelöscht. Ebenso werden auf dem ID-Provider-Computersystem die ausgelesenen Nutzerattribute gelöscht.

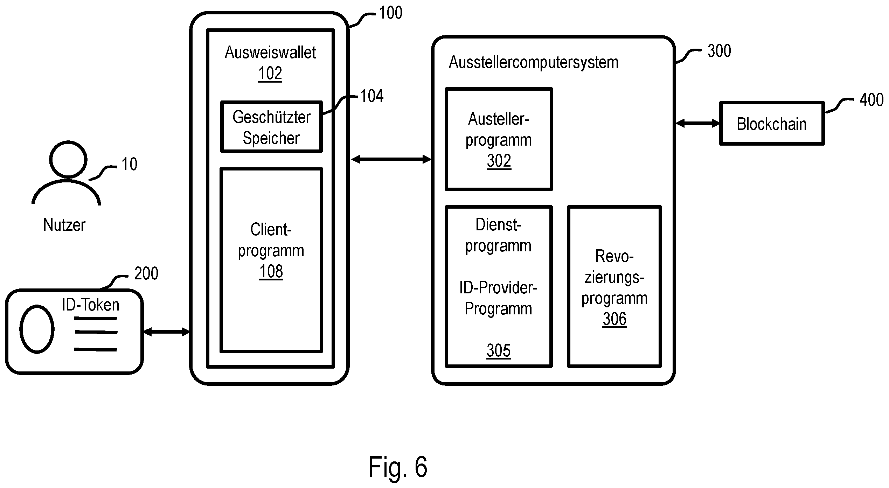

Figur 6 zeigt ein exemplarisches System 101 zum Ausstellen eines digitalen verifizierbaren Credentials unter Verwendung von Nutzerattributen, welche aus einem ID-Token 200 ausgelesen werden. Das in Figur 6 angezeigte System 101 entspricht im Wesentlichen dem in Figur 4 gezeigten System 101. Das in Figur 6 gezeigte System 101 unterscheidet sich von dem in Figur 4 gezeigten System 101 dadurch, dass das ID-Computerprogramm in das Ausstellercomputersystem 300 integriert ist. Hierzu umfasst das Ausstellercomputersystem 300 beispielsweise ein Programm 305, welches das Dienstprogramm zum Initiieren eines Auslesens von Nutzerattributen sowie ein ID-Provider-Programm zum tatsächlichen Auslesen von Nutzerattributen aus dem ID-Token 200 umfasst. Ein solcher Systemaufbau kann den Vorteil haben, dass es dadurch ermöglicht wird, dass der verschlüsselte Kommunikationskanal zum Auslesen von Nutzerattributen aus dem ID-Token durch das ID-Provider-Programm 305 innerhalb eines verschlüsselten Kommunikationskanals zwischen der Ausweiswallet 102 und dem Ausstellerprogramm 302, über welchen das digitale verifizierbare Credential übertragen wird. Hierbei kann insbesondere von Vorteil sein, dass im Zuge des Aufbaus des verschlüsselten Kommunikationskanals zwischen der Ausweiswallet 102 und dem Ausstellerprogramm 302 eine gegenseitige Authentifizierung von Ausweiswallet 102 und Ausstellerprogramm 302 erfolgt. Somit kann eine kryptografische Kanalbindung des Übertragungskanals zum Übertragen der Nutzerattribute an den Kanal zum Bereitstellen des digitalen verifizierbaren Credentials, durch welchen der Auslesekanal getunnelt wird, implementiert werden. Somit erfolgt neben der Kanalbindung auch eine Bindung des Übertragungskanals an die mittels Authentifizierens festgelegte Ausweiswallet 102 und Ausstellerprogramm 302. Hierzu wird der verschlüsselte Kommunikationskanal zwischen der Ausweiswallet 102 und dem Ausstellerprogramm 302 vor dem Aufbau des verschlüsselten Kommunikationskanals zum Auslesen der Nutzerattribute aus dem ID-Token 200 aufgebaut.

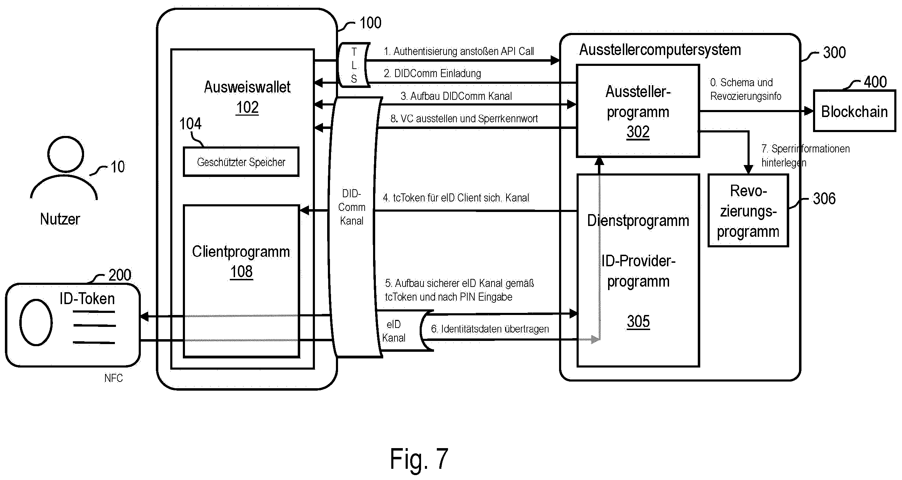

Figur 7 zeigt ein Flussdiagramm eines exemplarischen Verfahrens zum Auslesen von Nutzerattributen aus dem ID-Token 200 durch ein in das Ausstellercomputersystem 300 integriertes ID-Provider-Programm 305 eines digitalen verifizierbaren Credentials durch das Ausstellercomputersystem 300, welches die ausgelesenen Nutzerattribute umfasst. Zum Ausführen des Verfahrens wird beispielsweise das System 100 gemäß Figur 6 verwendet.

Initial sendet das Ausstellercomputersystem 300 des Ausstellerdienstes an die Blockchain 400 Identitätsdaten, welche den Ausstellerdienst identifizieren. Die entsprechenden Identitätsdaten umfassen beispielsweise einen öffentlichen kryptografischen Schlüssel des Ausstellerdienstes. Ferner sind beispielsweise Datenschemata von digitalen verifizierbaren Credentials hinterlegt, welche der Ausstellerdienst ausstellt. Die entsprechenden Datenschemata werden beispielsweise zusammen mit Definitionen von Credentials hinterlegt, welche die Typen von Credentials definieren, welche der Ausstellerdienst ausstellt. Schließlich werden in der Blockchain 400 ferner beispielsweise Revozierungsinformationen hinterlegt, welche definieren, wie von dem Ausstellerdienst ausgestellte Credentials revoziert werden.

In Schritt 1 initiiert der Nutzer den Prozess zum Ausstellen des digitalen verifizierbaren Credentials aus der Ausweiswallet 102 heraus. Beispielsweise ruft der Nutzer die Ausweiswallet 102 auf, welche ihn auf einer Ausgabevorrichtung des mobilen Endgeräts 100, beispielsweise einem Display, einen Button zum Ausstellen eines entsprechenden digitalen verifizierbaren Credentials, z. B. "Master-ID ausstellen", anzeigt. Klickt der Nutzer 10 auf den angezeigten Button, so initiiert die Ausweiswallet einen API-Call der Ausweis-Wallet, mit welcher diese eine Ausstellanfrage an das Ausstellercomputersystem 300 sendet.

In Schritt 2 erzeugt das Ausstellerprogramm 302 des Ausstellercomputersystems 300 eine Verbindungsanfrage zum Aufbau eines verschlüsselten Kommunikationskanals zwischen dem Ausstellerprogramm 302 des Computersystems 300 und der Ausweiswallet 102 des mobilen Endgeräts 100. Diese Verbindungsanfrage sendet das Ausstellercomputersystem 300 als Antwort auf den API-Call an die Ausweiswallet.

In Schritt 3 zeigt die Ausweiswallet 102 dem Nutzer 10 Details der empfangenen Verbindungsanfrage an. Der Nutzer kann diese Verbindungsanfrage bestätigen, woraufhin die Ausweiswallet 102 den verschlüsselten Kommunikationskanal mit dem Ausstellerprogramm 302 aufbaut. Bei dem entsprechenden verschlüsselten Kommunikationskanal handelt es sich beispielsweise um einen DIDComm-Kanal. In diesem Fall handelt es sich bei der Verbindungsanfrage um eine DIDComm-Einladung. Im Zuge des Aufbaus des verschlüsselten Kommunikationskanals zwischen der Ausweiswallet 102 und dem Ausstellercomputersystem 302 erfolgt eine gegenseitige Authentifizierung der Ausweiswallet 102 gegenüber dem Ausstellerprogramm 302 sowie eine Authentisierung des ID-Provider-Programms gegenüber der Ausweiswallet 102. Der Nutzer kann dadurch beispielsweise prüfen, ob er mit dem richtigen Aussteller verbunden ist.

In Schritt 4 sendet das Ausstellercomputersystem eine URL verschlüsselten Kommunikationskanal, beispielsweise einen DIDComm-Kanal. Unter der entsprechenden URL sind Parameter hinterlegt zum Aufbau eines verschlüsselten Kommunikationskanals zwischen dem Client-Programm 108 des mobilen Endgeräts 100 und dem ID-Provider-Computersystem 500. Die Ausweiswallet 102 ruft die entsprechende URL auf und stellt die darunter bereitgestellten Parameter dem Client-Programm 108 zum Aufbau des verschlüsselten Kommunikationskanals bereit. Das Client-Programm 108 verwendet die unter der URL bereitgestellten Parameter zum Initiieren des verschlüsselten Kommunikationskanals mit dem ID-Provider-Computersystem 500.

In Schritt 5 gibt das Client-Programm 108 auf einer Anzeigevorrichtung des mobilen Endgeräts 100, beispielsweise auf einem Display, den Auslesenden bzw. Ausleseberechtigten, d.h. den ID-Provider-Dienst, die von dem ID-Provider-Dienst angeforderten Nutzerattribute und/oder den Verwendungszweck der auszulesenden Nutzerattribute an. Der Nutzer 10 kann die angezeigten Informationen prüfen und für den Fall, dass er diese akzeptiert, eine PIN in das mobile Endgerät 100 über eine Eingabevorrichtung, beispielsweise ein als Touchdisplay konfiguriertes Display, eingeben. Die entsprechende PIN wird dem Client-Programm 108 an den ID-Token 200 weitergeleitet zur Verifikation. Ist die eingegebene PIN korrekt, so stellt das Client-Programm 108 eine Verbindung zwischen dem ID-Token 200 und dem ID-Provider-Computersystem 500 in Form eines Ende-zu-Ende-verschlüsselten Kommunikationskanals her. Dieser Kanal und damit alle über diesen Kanal übertragenen Daten werden durch den zuvor aufgebaut verschlüsselten Kanal, etwa einen DIDComm-Kanal, getunnelt. Über diesen getunnelten, verschlüsselten Kommunikationskanal können sich der ID-Token und das ID-Provider-Computersystem gegenseitig authentifizieren. Ist die gegenseitige Authentifizierung erfolgreich und kann das ID-Provider-Computersystem eine Zugriffsberechtigung zum Auslesen von Nutzerattributen aus dem ID-Token 200 nachweisen, so erhält das ID-Provider-Computersystem 500 einen Lesezugriff auf das ID-Token 200. Bei dem entsprechenden Berechtigungsnachweis kann es sich beispielsweise um ein Lesezertifikat des ID-Provider-Dienstes handeln.

In Schritt 4 werden über den getunnelten, verschlüsselten Kommunikationskanal zwischen ID-Token 200 und ID-Provider-Computersystem 500 die angeforderten Nutzerattribute von dem ID-Token 200 an das ID-Provider-Computersystem 500 übertragen.

In Schritt 7 erzeugt das Ausstellercomputersystem 300 bzw. das Ausstellerprogramm 302, welches auf dem Ausstellercomputersystem 300 installiert ist, ein Sperrkennwort zum Revozieren des auszustellenden digitalen verifizierbaren Credentials. Das Sperrkennwort wird zusammen mit weiteren Sperrinformationen in einem Revozierungsdienst 306 des Ausstellercomputersystems 300 hinterlegt. Die Sperrinformationen umfassen ferner beispielsweise einen Hash einer Restricted ID des ID-Tokens. Hierbei werden insbesondere beispielsweise keine personenidentifizierenden Informationen in dem Revozierungsdienst gespeichert.

In Schritt 8 sendet das Ausstellerprogramm 302 über den verschlüsselten Kommunikationskanal, bei welchem es sich beispielsweise um einen DID-Comm-Kanal handelt, das erstellte digitale verifizierbare Credential mit den ausgelesenen Nutzerattributen an die Ausweiswallet 102. Der Nutzer bekommt beispielsweise das empfangene digitale verifizierbare Credential angezeigt und kann dieses annehmen. Zusätzlich wird beispielsweise das Speerkennwort über diesen verschlüsselten Kommunikationskanal übertragen. Auf eine entsprechende Annahme hin wird das digitale verifizierbare Credential in dem geschützten Speicherbereich 104 der Ausweiswallet 102 des mobilen Endgeräts 100 gespeichert. Abschließend werden beispielsweise die ausgelesenen Nutzerattribute auf dem Ausstellercomputersystem gelöscht. Ebenso werden auf dem ID-Provider-Computersystem die ausgelesenen Nutzerattribute gelöscht.

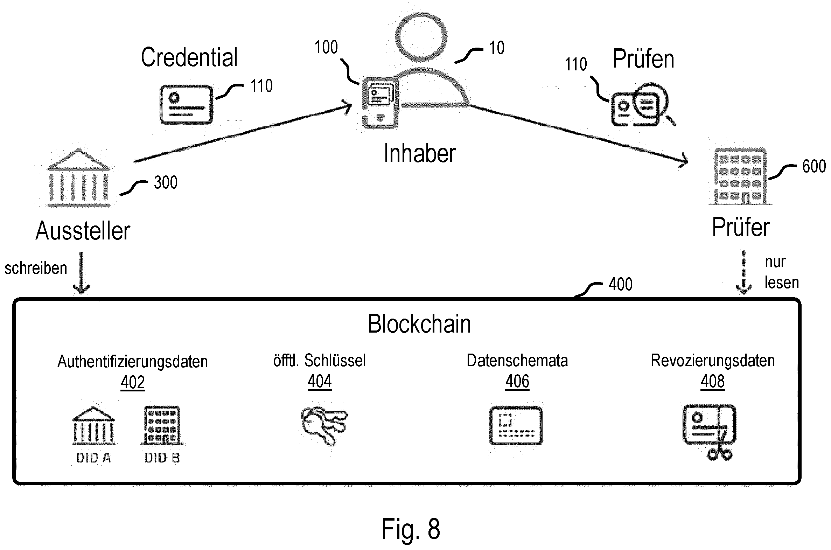

Figur 8 veranschaulicht eine Verwendung eines digitalen verifizierbaren Credentials 110, die beispielsweise nach einem der Verfahren einer der Figuren 2, 3, 5 oder 7, ausgestellt wurde. Der Nutzer 10 besitzt ein mobiles Endgerät 100, beispielsweise ein Smartphone, auf welchem das digitale verifizierbare Credential 110 in einer Ausweiswallet sicher abgespeichert ist. Das entsprechende digitale verifizierbare Credential 110 erhält der Nutzer 10 durch einen Aussteller 300. Der Nutzer 10 kann das so ausgestellte digitale verifizierbare Credential gegenüber einem Prüfer 600 verwenden. Hierzu sendet der Nutzer 10 das digitale verifizierbare Credential 110 beispielsweise von seinem mobilen Endgerät 100 an ein Prüfcomputersystem 600 des Prüfers. Dieser prüft das bereitgestellte digitale verifizierbare Credential 110 unter Verwendung einer SSI-Infrastruktur, welche eine Blockchain 400 umfasst. In der Blockchain 400 sind beispielsweise Authentifizierungsinformationen 402 zum Authentifizieren des Ausstellers 300 sowie des Prüfers 600 hinterlegt. Ferner sind in der Blockchain beispielsweise öffentliche kryptografische Schlüssel 404 des Ausstellers 300 hinterlegt, und deren Verwendung als Signaturprüfschlüssel eine Signatur des digitalen verifizierbaren Credentials 110 geprüft werden kann. Ferner sind in der Blockchain 400 beispielsweise Datenschemata 406 hinterlegt, die Strukturen des digitalen verifizierbaren Credentials 110 definieren. Unter Verwendung des hinterlegten Datenschemas 406 kann geprüft werden, ob das digitale verifizierbare Credential 110 die vorgesehene Datenstruktur aufweist und insbesondere ob das digitale verifizierbare Credential 110 die Nutzerattribute umfasst, welche es umfassen sollte. Ferner können in der Blockchain 400 Revozierungsdaten 408 hinterlegt sein, welche ein Revozieren eines ausgestellten digitalen verifizierbaren Credentials definieren. Beispielsweise kann in der Blockchain 400 hinterlegt sein, wo ein entsprechender Revozierungshinweis eines digitales verifizierbares Credential oder entsprechende Revozierungshinweis in der Blockchain 400 hinterlegt sein. Somit kann mittels der Blockchain 400 die Validität eines vorgelegten digitalen verifizierbaren Credentials 110 durch ein Prüfcomputersystem 600 geprüft werden. Fällt die Validitätsprüfung positiv aus und ist das Credential damit verifiziert, werden die von ihm bereitgestellten Daten, insbesondere die Nutzerattribute, von dem Prüfcomputersystem 600 als authentisch akzeptiert. Somit kann der Nutzer 10 sich auch in dieser Weise unter Verwendung des digitalen verifizierbaren Credentials gegenüber dem Prüfcomputersystem 600 ausweisen. Bei der Blockchain 400 handelt es sich beispielsweise um eine öffentliche genehmigungspflichtige Blockchain, bei der ein Schreibzugriff, etwa durch das Ausstellercomputersystem 300, nur mit einem entsprechenden Berechtigungsnachweis und jeder, wie etwa das Prüfcomputersystem 600, die Blockchain 400 mit ihren Einträgen lesen kann.

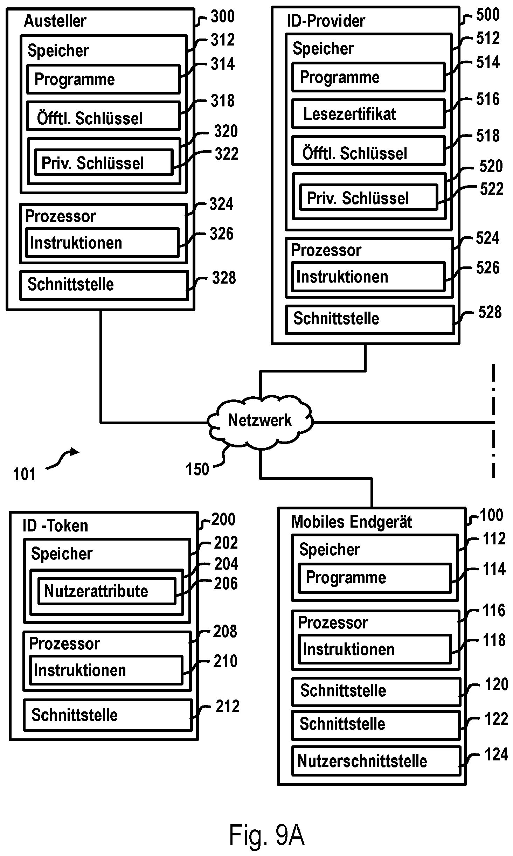

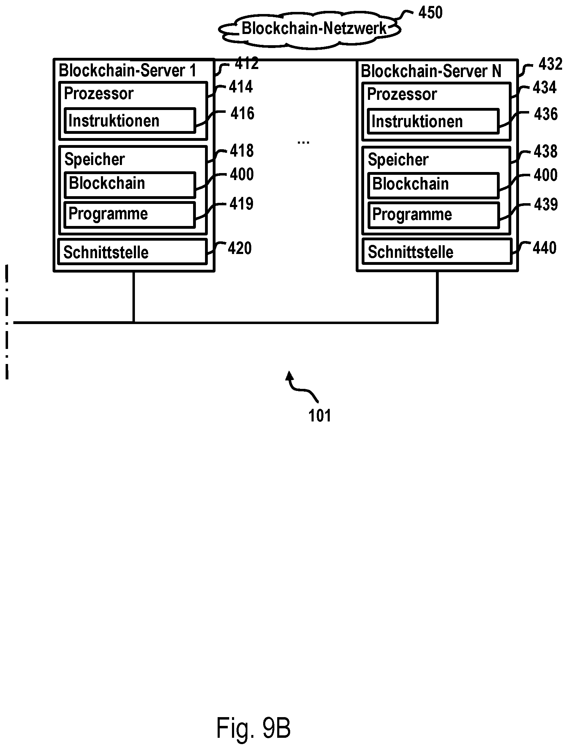

Figur 9, welche aus den Figuren 9A und 9B besteht, zeigt ein exemplarisches System 101 zum Ausstellen und Bereitstellen eines digitalen verifizierbaren Credentials unter Verwendung von Nutzerattributen, welche aus einem ID-Token 200 ausgelesen werden. Basierend auf dem System 101 der Figur 9 kann jedes der Systeme 101 gemäß der Figuren 1, 4 und 6 implementiert werden. Dabei kann das in Figur 9 gezeigt System 101 zum Ausführen jedes der exemplarischen Verfahren der Figuren 2, 3, 5 und 7 verwendet werden. Das in Figur 9 gezeigte exemplarische System 101 umfasst ein mobiles Endgerät 100, einen ID-Token 200, ein Ausstellercomputersystem 300, ein ID-Provider-Computersystem 500 und ein Blockchain-Netzwerk 450, welches eine Blockchain 400 bereitstellt.

Das mobile Endgerät 100, bei welchem es sich beispielsweise um ein Smartphone handelt, umfasst einen Speicher 112 mit Programmen 114. Diese Programme 104 umfassen beispielsweise eine Ausweiswallet. Ferner können diese Programme 104 beispielsweise ein Client-Programm und/oder umfassen. Zudem umfasst der Speicher 112 beispielsweise einen geschützten Speicherbereich, welcher der Ausweiswallt zugeordnet ist und in dem digitale verifizierbare Credentials der Ausweiswallet gespeichert werden. Ein Prozessor 116 ist dazu konfiguriert, bei einem Ausführen von Programminstruktionen 118, welche die Programme 114 bereitstellen, das mobile Endgerät 100 zum Ausstellen des digitalen verifizierbaren Credentials zu steuern und das ausgestellte digitale verifizierbare Credential in der Ausweiswallt bereitzustellen. Hierzu umfasst das mobile Endgerät 100 ferner eine Kommunikationsschnittstelle 120 zur Kommunikation mit dem ID-Token 200, insbesondere kontaktlos, etwa über NFC. Zudem umfasst das mobile Endgerät 100 ferner eine Kommunikationsschnittstelle 122 zur Kommunikation über das Netzwerk 150, etwa das Internet. Beispielsweise kommuniziert das mobile Endgerät 100 unter Verwendung der Kommunikationsschnittstelle 122 mit dem Ausstellercomputersystem 300 und/oder dem ID-Provider-Computersystem 500. Schließlich umfasst das mobile Endgerät 100 eine Nutzerschnittstelle 124 zum Interagieren eines Nutzers mit dem mobilen Endgerät 100. Beispielsweise umfasst die Nutzerschnittstelle 124 eine Eingabe- und eine Ausgabevorrichtung, beispielsweise ein Touchdisplay. Unter Verwendung der Eingabevorrichtung kann der Nutzer Daten und Befehle in das mobile Endgerät 100 eingeben. Unter Verwendung der Ausgabevorrichtung kann das mobile Endgerät 100 dem Nutzer Daten anzeigen. Beispielsweise ist die Nutzerschnittstelle 124 zum Empfangen von Authentisierungsdaten zum Authentisieren des Nutzers gegenüber dem ID-Token 200 konfiguriert. Beispielsweise umfasst die Nutzerschnittstelle 124 ein oder mehrere Sensoren, wie etwa eine Kamera oder ein Fingerabdruckscanner, zum Erfassen ein oder mehrerer biometrischer Authentifizierungsdaten zum Authentifizieren des Nutzers.

Der ID-Token 200 umfasst einen Speicher 202 mit einem geschützten Speicherbereich 202, in welchem Nutzerattribute 206 eines Nutzers gespeichert sind, welchem der ID-Token 200 zugeordnet ist. Ein Auslesen der Nutzerattribute 206 erfordert beispielsweise einen erfolgreichen Nachweis einer Leseberechtigung, etwa durch ein entsprechendes Lesezertifikat einer PKI-Infrastruktur. Ferner umfasst der ID-Token einen Prozessor 208, welcher unter Ausführen der Programminstruktionen 210, ein Auslesen der Nutzerattribute 206 steuert. Schließlich umfasst der ID-Token 200 eine Kommunikationsschnittstelle 212 zur Kommunikation mit dem mobilen Endgerät 100, beispielsweise über NFC.

Das Ausstellercomputersystem 300 ist zum Ausstellen digitaler verifizierbarer Credentials konfiguriert. Insbesondere ist das Ausstellercomputersystem 300 zum Initiieren eines Auslesens der Nutzerattribut 206 des ID-Tokens 200 unter Verwendung des ID-Provider-Computersystems 500 zum Ausstellen des digitalen verifizierbaren Credentials konfiguriert. In einem Speicher 312 des Ausstellercomputersystems 300 sind Programmen 314 gespeichert. Diese Programme umfassen beispielsweise ein Ausstellerprogramm zum Ausstellen der digitalen verifizierbaren Credentials, ein Dienstprogramm zum Steuern des Auslesens der Nutzerattribute 206 aus dem ID-Token 200 und/oder ein Revozierungsprogramm zum Revozieren ausgestellter digitaler verifizierbarer Credential. Beispielsweise können die Programmen 314 zusätzlich ein ID-Provider-Programm umfassen, wodurch das ID-Provider-Computersystem 500 mit seinen Funktionen in das Ausstellercomputersystem 300 integriert werden kann. In dem Speicher 318 ist ferner ein öffentlicher kryptographischer Schlüssel 318 als Signaturprüfschlüssel des Ausstellercomputersystems 300 gespeichert. Ein zugehöriger privater kryptographischer Schlüssel 322 als Signaturschlüssel des Ausstellercomputersystems 300 zum Signieren von digitalen verifizierbaren Credentials ist beispielsweise in einem geschützten Speicherbereich 320 des Speichers 312 gespeichert. Zudem umfasst das Ausstellercomputersystem 300 einen Prozessor 324, welcher zum Ausführen vom Programminstruktionen 326 der Programme 314 konfiguriert ist. Durch ein Ausführen der Programminstruktionen 326 durch den Prozessor 324 wird das Ausstellercomputersystem 300 zum Ausstellen digitaler verifizierbarer Credentials gesteuert. Hierzu umfasst das Ausstellercomputersystem ferner eine Kommunikationsschnittstelle 328 zur Kommunikation über das Netzwerk 150, beispielsweise mit dem mobilen Endgerät 100, dem Blockchain Netzwerk 450 und/oder dem ID-Provider-Computersystem 500.

Das ID-Provider-Computersystem 500 ist zum Auslesen der Nutzerattribute 206 aus dem ID-Token 206 konfiguriert. Hierzu umfasst es in seinem Speicher 512 ein Lesezertifikat 516 einer PKI zum Nachweis seien Leseberechtigung. Alterativer Weise könnte die Lesefunktionalität zum Lesen der Nutzerattribute 206 aus dem ID-Token 206 auch in das Ausstellercomputersystem 300 integriert sein. In diesem Fall würde das das Ausstellercomputersystem 300 in seinem Speicher 312 ein entsprechendes auf das Austellercomputersystem ausgestelltes Lesezertifikat einer PKI umfassen. Ferner würden die Programme 314 des Austellercomputersystems 300 ein ID-Provider-Programm zum Auslesen von Nutzerattributen umfassen. Damit wäre das ID-Provider-Computersystem 500 bzw. dessen Funktionalität in das Ausstellercomputersystem integriert und das System 101 würde kein eigenständiges ID-Provider-Computersystem 500 umfassen.

Alternativer Weise umfasst das System 101 ein eigenständiges ID-Provider-Computersystem 500 mit einem Speicher 512, welcher ferner Programme 514, wie etwa ein ID-Provider-Programm, zum Auslesen von Nutzerattributen aus ID-Token, umfasst. Ferner umfasst der Speicher 512 beispielsweise einen öffentlichen kryptographischen Schlüssel 518 sowie einen zugehörigen, in einem geschützten Speicherbereich 520 des Speichers 512 gespeicherten, privaten kryptographischen Schlüssel 522 des ID-Provider-Computersystems 500. Beispielsweise ist das Lesezertifikat 516 dem öffentlichen kryptographischen Schlüssel 518 des ID-Provider-Computersystems 500 zugeordnet, sodass des ID-Provider-Computersystem 500, etwa im Zuge eines Challenge-Response-Verfahrens, unter Verwendung des privaten kryptographischen Schlüssels 522 nachweisen kann, dass es der berechtigte Inhaber des Lesezertifikats 516 ist. Zum Ausführen des Auslesens der Nutzerattribute 206 aus dem ID-Token 200 umfasst das ID-Provider-Computersystem 500 einen Prozessor 524, welcher das ID-Provider-Computersystem 500 steuert, indem er Programminstruktionen 526 der Programme 514 ausführt. Schließlich umfasst das ID-Provider-Computersystem 500 einen Kommunikationsschnittstelle 528 zur Kommunikation über das Netzwerk 150, etwa zum Auslesen der Nutzerattribute 206 über das mobile Endgerät 100 aus dem ID-Token 200 und/oder zum Weiterleiten der ausgelesenen Nutzerattribute 206 an das Ausstellercomputersystem 300.

Schließlich umfasst das System 101 das Blockchain-Netzwerk 450 einer SSI-Infrastruktur, welches eine Blockchain 400 bereitstellt. Bei der Blockchain 400 handelt es sich beispielsweise um eine öffentliche genehmigungspflichtige Blockchain, welche von dem Blockchain-Netzwerk 450 als verteiltes Register verwaltet wird. Das Blockchain-Netzwerk 450 umfasst eine Mehrzahl von Blockchain-Servern 412, 432, auf welchen beispielsweise jeweils eine Kopie der Blockchain 400 in einem entsprechenden Speicher 418, 438 gespeichert ist. Die Blockchain-Server 412, 432 umfassen jeweils einen Prozessor 414, 434 zum ausführen von Programminstruktionen 416, 436 von Programmen 419, 439 zum Verwalten der Blockchain 400. Schließlich umfassen die Blockchain-Server 412, 432 jeweils eine Kommunikationsschnittstelle 420, 440 zum Kommunizieren über das Netzwerk 150, etwa mit dem Ausstellercomputersystem 300.

### Bezugszeichenliste

- 10: Nutzer
- 100: mobiles Endgerät
- 101: System
- 102: Ausweiswallet
- 104: geschützter Speicherbereich
- 106: Browser
- 108: Client-Programm
- 112: Speicher
- 114: Programme
- 116: Prozessor
- 118: Programminstruktionen
- 120: Kommunikationsschnittstelle
- 122: Kommunikationsschnittstelle
- 124: Nutzerschnittstelle
- 150: Netzwerk
- 200: ID-Token
- 202: Speicher
- 204: geschützter Speicherbereich
- 206: Nutzerattribute
- 208: Prozessor
- 210: Programminstruktionen
- 212: Kommunikationsschnittstelle
- 300: Ausstellercomputersystem
- 302: Austellerprogramm
- 304: Dienstprogramm
- 305: Dienstprogramm/ID-Provider-Programm
- 306: Revozierungsprogramm
- 312: Speicher
- 314: Programme
- 318: öffentlicher kryptographischer Schlüssel
- 320: geschützter Speicherbereich
- 322: privater kryptographischer Schlüssel
- 324: Prozessor
- 326: Programminstruktionen
- 328: Kommunikationsschnittstelle
- 400: Blockchain
- 402: Authentifizierungsdaten
- 404: öffentliche kryptographische Schlüssel
- 406: Datenschemata
- 408: Revozierungsdaten
- 412: Blockchain-Server
- 414: Speicher
- 416: Prozessor
- 418: Programminstruktionen
- 419: Programme
- 420: Kommunikationsschnittstelle
- 432: Blockchain-Server
- 434: Speicher
- 436: Prozessor
- 438: Programminstruktionen
- 439: Programme
- 440: Kommunikationsschnittstelle
- 450: Blockchain-Netzwerk
- 500: ID-Provider-Computersystem
- 512: Speicher
- 514: Programme
- 516: Lesezertifikat
- 518: öffentlicher kryptographischer Schlüssel
- 520: geschützter Speicherbereich
- 522: privater kryptographischer Schlüssel
- 524: Prozessor
- 526: Programminstruktionen
- 528: Kommunikationsschnittstelle

## Patentansprüche

1. Verfahren zum Auslesen ein oder mehrere Nutzerattribute (206) aus einem ID-Token unter Verwendung eines ID-Provider-Computersystems (500) eines ID-Provider-Dienstes und Bereitstellen eines digitalen verifizierbaren Credentials mit den ausgelesenen Nutzerattributen (206) in einer digitalen Ausweiswallet (102) eines mobilen Endgeräts (100) unter Verwendung eines Ausstellercomputersystems (300) eines Ausstellerdienstes einer SSI-Infrastruktur,
wobei die Nutzerattribute (206) eines Nutzers (10) in einem geschützten Speicherbereich (204) eines Speichers (202) des ID-Tokens (200) gespeichert sind,
wobei die SSI-Infrastruktur eine Blockchain (400) umfasst, in welcher ein Datenschema (406) für das digitale verifizierbare Credential und ein dem Ausstellerdienst zugeordneter öffentlicher kryptographischer Schlüssel (318, 404) hinterlegt sind, wobei das Datenschema (406) als Vorlage zum Prüfen des digitalen verifizierbaren Credentials dient, wobei der öffentliche kryptographische Schlüssel (318, 404) des Ausstellerdienstes als Signaturprüfschlüssel zum Prüfen einer Signatur des digitale verifizierbaren Credentials dient, welche mit einem dem Signaturprüfschlüssel zugeordneten privaten kryptographischen Schlüssel (322) des Ausstellerdienstes als Signaturschlüssel erstellt ist,
wobei das Verfahren umfasst:
• Senden einer Ausstellanfrage zum Ausstellen des digitalen verifizierbaren Credentials von dem mobilen Endgerät (100) über ein Netzwerk (150) an das Ausstellercomputersystem (300) zum Initiieren eines Auslesens der Nutzerattribute (206) durch das ID-Provider-Computersystem (500) aus dem ID-Token (200),
• Freigeben eines Lesezugriff des ID-Provider-Computersystems (500) auf die Nutzerattribute (206) in dem ID-Token (200) über das mobile Endgerät (100) und das Netzwerk (150) zum Weiterleiten der ausgelesenen Nutzerattribute (206) an das Ausstellercomputersystem (300),
• Empfangen des von dem Ausstellerdienst ausgestellten digitalen verifizierbaren Credentials durch die digitale Ausweiswallet (102) des mobilen Endgeräts (100) von dem Ausstellercomputersystem (300) über das Netzwerk (150), wobei das digitale verifizierbare Credential in Übereinstimmung mit dem in der Blockchain (400) bereitgestellten Datenschema (406) aufgebaut ist, die ausgelesenen Nutzerattribute (206) umfasst und unter Verwendung des Signaturschlüssels (322) des Ausstellerdienstes signiert ist,
• Speichern des empfangenen digitalen verifizierbaren Credentials in der Ausweiswallet (102) des mobilen Endgeräts (100).

2. Verfahren nach Anspruch 1, wobei das Freigeben des Lesezugriff des ID-Provider-Computersystems (500) umfasst:
• Authentisieren des Nutzers (10) gegenüber dem ID-Token (200) unter Verwendung des mobilen Endgeräts (100),
• Authentisieren des ID-Provider-Computersystems (500) gegenüber dem ID-Token (200) über das mobile Endgerät (100) unter Verwendung eines PKI-basierten Lesezertifikats (516) des ID-Provider-Computersystems (500) zum Auslesen der Nutzerattributen (206) aus dem ID-Token (200),
• auf eine erfolgreiche Authentisierung des Nutzers (10) und des ID-Provider-Computersystems (500) gegenüber dem ID-Token (200), wird der Lesezugriff des ID-Provider-Computersystems (500) freigegeben.

3. Verfahren nach einem der vorangehenden Ansprüche, wobei das mobile Endgerät (100) einen ersten verschlüsselten Kommunikationskanal über das Netzwerk (150) zu dem Ausstellercomputersystem (300) aufbaut, über welchen die Ausstellanfrage gesendet wird,
wobei es sich bei dem ersten verschlüsselten Kommunikationskanal beispielsweise um einen TLS-Kanal handelt.

4. Verfahren nach einem der vorangehenden Ansprüche, wobei das mobile Endgerät (100) ferner ein Client-Programm (108) umfasst, über welches der Lesezugriff des ID-Provider-Computersystems (500) auf den ID-Token (200) erfolgt, wobei der Lesezugriff des ID-Provider-Computersystems (500) auf den ID-Token (200) über einen zweiten verschlüsselten Kommunikationskanal erfolgt.

5. Verfahren nach Anspruch 4, wobei der Aufbau des ersten verschlüsselten Kommunikationskanals seitens des mobilen Endgeräts (100) unter Verwendung eines auf dem mobilen Endgerät (100) installierten Browsers (106) erfolgt, wobei ein Aufbauen des zweiten verschlüsselten Kommunikationskanals umfasst:
• Aufrufen einer Webseite des Ausstellers unter Verwendung des Browsers (106), wobei die Webseite eine URL zum Abrufen von Parametern zum Aufbau des zweiten verschlüsselten Kommunikationskanals zum Auslesen der Nutzerattribute (206) bereitstellt,
• Aufrufen der URL unter Verwendung des Browsers (106),
• Bereitstellen der von der aufgerufenen URL umfassten Parameter für das Client-Programm (108),
• Aufbauen des zweiten verschlüsselten Kommunikationskanals über das Client-Programm (108) unter Verwendung der von der URL bereitgestellten Parameter, oder
wobei der Aufbau des ersten verschlüsselten Kommunikationskanals seitens des mobilen Endgeräts (100) durch die Ausweiswallet (102) erfolgt, wobei ein Aufbauen des zweiten verschlüsselten Kommunikationskanals umfasst:
• in Antwort auf die Ausstellanfrage, Empfangen der URL zum Abrufen von Parametern zum Aufbau des zweiten verschlüsselten Kommunikationskanals durch die Ausweiswallet (102),
• Aufrufen der URL durch die Ausweiswallet (102),
• Aufbauen des zweiten verschlüsselten Kommunikationskanals über das Client-Programm (108) unter Verwendung der von der URL bereitgestellten Parameter.

6. Verfahren nach einem der Ansprüche 4 bis 5, wobei das Verfahren ferner ein Aufbauen eines dritten verschlüsselten Kommunikationskanals zwischen der Ausweiswallet (102) und dem Ausstellercomputersystem (300) umfasst, über welchen die Ausweiswallt (102) das digitale verifizierbare Credential empfängt, wobei der Aufbau des dritten verschlüsselten Kommunikationskanal eine gegenseitige Authentisierung zwischen Ausweiswallet (102) und Ausstellercomputersystem (300) umfasst.

7. Verfahren nach Anspruch 6, wobei der Browser (106) eine Aufforderung zum Aufbau des dritten verschlüsselten Kommunikationskanals empfängt, wobei die Aufforderung ein oder mehrere Parameter des Ausstellercomputersystems (500) zum Aufbau des dritten verschlüsselten Kommunikationskanals umfasst und der Browser (106) die Aufforderung der Ausweiswallet (102) zum Aufbau des dritten verschlüsselten Kommunikationskanals bereitstellt.

8. Verfahren nach Anspruch 7, wobei der Browser (106) die Aufforderung zum Aufbau des dritten verschlüsselten Kommunikationskanals auf ein erfolgreiches Auslesen der Nutzerattribute (206) hin empfängt oder
wobei der Browser (106) die Aufforderung zum Aufbau des dritten verschlüsselten Kommunikationskanals in Antwort auf das Aufrufen der Webseite des Ausstellerdienstes empfängt, wobei ein erfolgreicher Aufbau des dritten verschlüsselten Kommunikationskanals eine Voraussetzung für den Aufbau des zweiten verschlüsselten Kommunikationskanals zum Auslesen der Nutzerattribute (206) ist,
wobei die URL zum Aufbau des zweiten verschlüsselten Kommunikationskanals dem Browser (106) des mobilen Endgeräts (100) beispielsweise erst auf einen erfolgreichen Aufbau des dritten verschlüsselten Kommunikationskanals hin bereitgestellt wird.

9. Verfahren nach Anspruch 6, wobei die Ausweiswallet (102) das Client-Programms (108) umfasst, wobei die Ausstellanfrage unter Verwendung des Client-Programms (108) gesendet wird, wobei der erste verschlüsselte Kommunikationskanal zwischen der Ausweiswallet (102) und dem Ausstellercomputersystem (300) aufgebaut wird,
wobei die Ausstellanfrage beispielsweise unter Verwendung eines API-Calls an das Ausstellercomputersystem (300) gesendet wird.

10. Verfahren nach Anspruch 9, wobei die Ausweiswallet (102) in Antwort auf die Ausstellanfrage die Aufforderung zum Aufbau eines dritten verschlüsselten Kommunikationskanals zwischen der Ausweiswallet (102) und dem Ausstellercomputersystem (300) empfängt und den dritten verschlüsselten Kommunikationskanal unter Verwendung der von der Aufforderung bereitgestellten Parameter aufbaut,
wobei ein erfolgreicher Aufbau des dritten verschlüsselten Kommunikationskanals eine Voraussetzung für den Aufbau des zweiten verschlüsselten Kommunikationskanals ist, welcher als verschlüsselter Unterkanal in dem dritten Kommunikationskanal aufgebaut wird.

11. Verfahren nach einem der Ansprüche 6 bis 10, wobei es sich bei dem dritten verschlüsselten Kommunikationskanal um einen DIDComm-Kanal handelt.

12. Verfahren nach einem der vorangehenden Ansprüche, wobei das Ausstellercomputersystem (300) das ID-Provider-Computersystem (500) umfasst oder
wobei es sich bei dem ID-Provider-Computersystem (500) um ein von dem Ausstellercomputersystem (300) unabhängiges Computersystem handelt,
wobei beispielsweise das ID-Provider-Computersystems (500) die ausgelesenen Nutzerattribute (206) über einen vierten verschlüsselten Kommunikationskanal an das Ausstellercomputersystem (300) weiterleitet.

13. Mobiles Endgerät (100) zum Auslesen ein oder mehrere Nutzerattribute (206) aus einem ID-Token (200) und Bereitstellen eines digitalen verifizierbaren Credentials mit den ausgelesenen Nutzerattributen (206) in einer digitalen Ausweiswallet (102) des mobilen Endgeräts (100), wobei das Auslesen über das mobile Endgerät (100) unter Verwendung eines ID-Provider-Computersystems (500) eines ID-Provider-Dienstes erfolgt, wobei es sich bei dem bereitgestellten digitalen verifizierbaren Credential um ein unter Verwendung eines Ausstellercomputersystems (300) eines Ausstellerdienstes einer SSI-Infrastruktur ausgestelltes digitalen verifizierbaren Credential handelt,
wobei die SSI-Infrastruktur eine Blockchain (400) umfasst, in welcher ein Datenschema (406) für das digitale verifizierbare Credential und ein dem Ausstellerdienst zugeordneter öffentlicher kryptographischer Schlüssel (318, 404) hinterlegt sind, wobei das Datenschema (406) als Vorlage zum Prüfen des digitalen verifizierbaren Credentials dient, wobei der öffentliche kryptographische Schlüssel (318, 404) des Ausstellerdienstes als Signaturprüfschlüssel zum Prüfen einer Signatur des digitale verifizierbaren Credentials dient, welche mit einem dem Signaturprüfschlüssel zugeordneten privaten kryptographischen Schlüssel (322) des Ausstellerdienstes als Signaturschlüssel erstellt ist,
wobei das mobile Endgerät (100) einen Prozessor (116), einen Speicher (112) mit Programminstruktionen (118), eine Kommunikationsschnittstelle (120) zur Kommunikation mit dem ID-Token (200) und eine Kommunikationsschnittstelle (122) zur Kommunikation über ein Netzwerk (150) umfasst,
wobei ein Ausführen der Programminstruktionen (118) durch den Prozessor (116) des mobilen Endgeräts (100) den Prozessor (116) dazu veranlasst, das mobile Endgerät (100) zu steuern zum:
• Senden einer Ausstellanfrage zum Ausstellen des digitalen verifizierbaren Credentials von dem mobilen Endgerät (100) über das Netzwerk (150) an das Ausstellercomputersystem (300) zum Initiieren eines Auslesens der Nutzerattribute (206) durch das ID-Provider-Computersystem (500) aus dem ID-Token (200),
• Freigeben eines Lesezugriff des ID-Provider-Computersystems (500) auf die in einem geschützten Speicherbereich (204) eines Speichers (202) des ID-Tokens (200) gespeicherten Nutzerattribute (206) über das mobile Endgerät (100) und das Netzwerk (150) zum Weiterleiten der ausgelesenen Nutzerattribute (206) an das Ausstellercomputersystem (300),
• Empfangen des von dem Ausstellerdienst ausgestellten digitalen verifizierbaren Credentials durch die digitale Ausweiswallet (102) des mobilen Endgeräts (100) von dem Ausstellercomputersystem (300) über das Netzwerk (150), wobei das digitale verifizierbare Credential in Übereinstimmung mit dem in der Blockchain (400) bereitgestellten Datenschema (406) aufgebaut ist, die ausgelesenen Nutzerattribute (206) umfasst und unter Verwendung des Signaturschlüssels (322) des Ausstellerdienstes signiert ist,
• Speichern des empfangenen digitalen verifizierbaren Credentials in der Ausweiswallet (102) des mobilen Endgeräts (100).

14. Ausstellercomputersystem (300) eines Ausstellerdienstes einer SSI-Infrastruktur zum Auslesen ein oder mehrere Nutzerattribute (206) aus einem ID-Token (200) und Bereitstellen eines digitalen verifizierbaren Credentials mit den ausgelesenen Nutzerattributen (206) in einer digitale Ausweiswallet (102) eines mobilen Endgeräts (100), wobei das Auslesen über das mobile Endgerät (100) unter Verwendung eines ID-Provider-Computersystems (500) eines ID-Provider-Dienstes erfolgt,
wobei die SSI-Infrastruktur eine Blockchain (400) umfasst, in welcher ein Datenschema (406) für das digitale verifizierbare Credential und ein dem Ausstellerdienst zugeordneter öffentlicher kryptographischer Schlüssel (318, 404) hinterlegt sind, wobei das Datenschema (406) als Vorlage zum Prüfen des digitalen verifizierbaren Credentials dient, wobei der öffentliche kryptographische Schlüssel (318, 404) des Ausstellerdienstes als Signaturprüfschlüssel zum Prüfen einer Signatur des digitale verifizierbaren Credentials dient, welche mit einem dem Signaturprüfschlüssel zugeordneten privaten kryptographischen Schlüssel (322) des Ausstellerdienstes als Signaturschlüssel erstellt ist,
wobei Ausstellercomputersystem (300) einen Prozessor (324), einen Speicher (312) mit Programminstruktionen (326) und eine Kommunikationsschnittstelle (328) zur Kommunikation über ein Netzwerk (150) umfasst,
wobei ein Ausführen der Programminstruktionen (326) durch den Prozessor (324) des Ausstellercomputersystem (300) den Prozessor (324) dazu veranlasst, das Ausstellercomputersystem (300) zu steuern zum:
• Empfangen einer Ausstellanfrage zum Ausstellen des digitalen verifizierbaren Credentials von dem mobilen Endgerät (100) über das Netzwerk (150),
• Initiieren eines Auslesens der Nutzerattribute (206) durch das ID-Provider-Computersystem (500) aus einem geschützten Speicherbereichs (204) eines Speichers (202) des ID-Tokens (200) auf die Ausstellanfrage hin,
• Empfangen über das mobile Endgerät (100) und das Netzwerk (150) ausgelesenen Nutzerattribute (206) von dem ID-Provider-Computersystem (500),
• Ausstellen des digitalen verifizierbaren Credential, welches die ausgelesenen Nutzerattribute (206) umfasst, in Übereinstimmung mit dem in der Blockchain (400) bereitgestellten Datenschema (406) aufgebaut ist und Verwendung des Signaturschlüssels (322) des Ausstellerdienstes signiert ist,
• Senden des ausgestellten digitalen verifizierbaren Credentials über das Netzwerk (150) an dies Ausweiswallet (102) des mobilen Endgeräts (100).

15. System (101) zum Auslesen ein oder mehrere Nutzerattribute (206) aus einem ID-Token (200) und Bereitstellen eines digitalen verifizierbaren Credentials mit den ausgelesenen Nutzerattributen(206) in einer digitalen Ausweiswallet (102) eines mobilen Endgeräts (100) nach Anspruch 13 unter Verwendung eines Ausstellercomputersystems (300) eines Ausstellerdienstes einer SSI-Infrastruktur, wobei es sich bei dem Ausstellercomputersystem (300) um ein Ausstellercomputersystem nach Anspruch 14 und das Auslesen durch das Ausstellercomputersystem (300) über das mobile Endgerät (100) unter Verwendung eines ID-Provider-Computersystems (500) eines ID-Provider-Dienstes erfolgt,
wobei das System (101) ferner beispielsweise das ID-Provider-Computersystem (500) und/oder die Blockchain (400) umfasst.

## Claims

1. A method for reading one or more user attributes (206) from an ID token, using an ID-provider computer system (500) of an ID-provider service and providing a digital verifiable credential with the read user attributes (206) in a digital credential wallet (102) of a mobile terminal (100) using an issuer computer system (300) of an issuer service of an SSI infrastructure,
wherein the user attributes (206) of a user (10) are stored in a protected memory area (204) of a memory (202) of the ID token (200),
wherein the SSI infrastructure comprises a blockchain (400) in which a data schema (406) for the digital verifiable credential and a public cryptographic key (318, 404) associated with the issuer service are stored, wherein the data schema (406) is used as a template for verifying the digital verifiable credential, wherein the public cryptographic key (318, 404) of the issuer service is used as a signature verification key for verifying a signature of the digital verifiable credential, which is created with a private cryptographic key (322) of the issuer service associated with the signature verification key as the signature key,
wherein the method comprises:
• sending an issuing request for issuing the digital verifiable credential from the mobile terminal (100) via a network (150) to the issuer computer system (300) to initiate reading of the user attributes (206) by the ID-provider computer system (500) from the ID token (200),
• enabling reading access of the ID-provider computer system (500) to the user attributes (206) in the ID token (200) via the mobile terminal (100) and the network (150) for forwarding the read user attributes (206) to the issuer computer system (300),
• receiving the digital verifiable credential issued by the issuer service by the digital credential wallet (102) of the mobile terminal (100) of the issuer computer system (300) via the network (150), wherein the digital verifiable credential is established in accordance with the data schema (406) provided in the blockchain (400), comprises the read user attributes (206) and is signed using the signature key (322) of the issuer service,
• storing the received digital verifiable credential in the credential wallet (102) of the mobile terminal (100).

2. The method according to claim 1, wherein enabling the reading access of the ID-provider computer system (500) comprises:
• authenticating the user (10) with respect to the ID token (200) using the mobile terminal (100),
• authenticating the ID-provider computer system (500) with respect to the ID token (200) via the mobile terminal (100) using a PKI-based read certificate (516) of the ID-provider computer system (500) to read the user attributes (206) from the ID token (200),
• on successful authentication of the user (10) and the ID-provider computer system (500) with respect to the ID token (200), the reading access of the ID-provider computer system (500) is enabled.

3. The method according to any one of the preceding claims, wherein the mobile terminal (100) establishes a first encrypted communication channel via the network (150) to the issuer computer system (300), via which the issuing request is sent,
wherein the first encrypted communication channel is for example a TLS channel.

4. The method according to any one of the preceding claims, wherein the mobile terminal (100) further comprises a client program (108), via which the reading access of the ID-provider computer system (500) to the ID token (200) takes place, wherein the reading access of the ID-provider computer system (500) to the ID token (200) takes place via a second encrypted communication channel.

5. The method according to claim 4, wherein the first encrypted communication channel is established by the mobile terminal (100) using a browser (106) installed on the mobile terminal (100), wherein establishing the second encrypted communication channel comprises:
• accessing a webpage of the issuer by using the browser (106), wherein the webpage provides a URL for retrieving parameters for establishing the second encrypted communication channel for reading the user attributes (206),
• retrieving the URL using the browser (106),
• providing the parameters included in the retrieved URL for the client program (108),
• establishing the second encrypted communication channel via the client program (108) using the parameters provided by the URL, or
• wherein the first encrypted communication channel is established by the mobile terminal (100) through the credential wallet (102), wherein establishing the second encrypted communication channel comprises:
• in response to the issuing request, receiving the URL for retrieving parameters for establishing the second encrypted communication channel through the credential wallet (102),
• retrieving the URL through the credential wallet (102),
• establishing the second encrypted communication channel via the client program (108) using the parameters provided by the URL.

6. The method according to any one of claims 4 to 5, wherein the method further comprises establishing a third encrypted communication channel between the credential wallet (102) and the issuer computer system (300), via which the credential wallet (102) receives the digital verifiable credential, wherein the establishment of the third encrypted communication channel comprises a mutual authentication between the credential wallet (102) and issuer computer system (300).

7. The method according to claim 6, wherein the browser (106) receives a request for establishing the third encrypted communication channel, wherein the request comprises one or more parameters of the issuer computer systems (500) to establish the third encrypted communication channel, and the browser (106) provides the request of the credential wallet (102) to establish the third encrypted communication channel.

8. The method according to claim 7, wherein the browser (106) receives the request to establish the third encrypted communication channel in response to a successful reading of the user attributes (206) or
wherein the browser (106) receives the request to establish the third encrypted communication channel in response to retrieving the webpage of the issuer service, wherein a successful establishment of the third encrypted communication channel is a prerequisite for establishing the second encrypted communication channel for reading the user attributes (206),
wherein the URL for establishing the second encrypted communication channel is provided to the browser (106) of the mobile terminal (100), for example only after successfully establishing the third encrypted communication channel.

9. The method according to claim 6, wherein the credential wallet (102) comprises the client program (108), wherein the issuing request is sent using the client program (108), wherein the first encrypted communication channel is established between the credential wallet (102) and the issuer computer system (300),
wherein the issuing request is sent to the issuer computer system (300) using an API call for example.

10. The method according to claim 9, wherein the credential wallet (102) in response to the issuing request receives the request to establish a third encrypted communication channel between the credential wallet (102) and the issuer computer system (300) and establishes the third encrypted communication channel using the parameters provided by the request,
wherein a successful establishment of the third encrypted communication channel is a prerequisite for establishing the second encrypted communication channel, which is established as an encrypted subchannel in the third communication channel.

11. The method according to any one of claims 6 to 10, wherein the third encrypted communication channel is a DIDComm channel.

12. The method according to any one of the preceding claims, wherein the issuer computer system (300) comprises the ID-provider computer system (500) or
wherein the ID-provider computer system (500) is a computer system independent of the issuer computer system (300),
wherein, for example, the ID-provider computer system (500) forwards the read user attributes (206) to the issuer computer system (300) via a fourth encrypted communication channel.

13. A mobile terminal (100) for reading one or more user attributes (206) from an ID token (200) and providing a digital verifiable credential with the read user attributes (206) in a digital credential wallet (102) of the mobile terminal (100), wherein the reading is performed via the mobile terminal (100) using an ID-provider computer system (500) of an ID-provider service, wherein the provided digital verifiable credential is a digital verifiable credential issued using an issuer computer system (300) of an issuer service of an SSI infrastructure,
wherein the SSI infrastructure comprises a blockchain (400), in which a data schema (406) for the digital verifiable credential and a public cryptographic key (318, 404) associated with the issuer service are stored, wherein the data schema (406) is used as a template for verifying the digital verifiable credential, wherein the public cryptographic key (318, 404) of the issuer service is used as signature verification key for verifying a signature of the digital verifiable credential, which is created with a private cryptographic key (322) of the issuer service associated with the signature verification key as signature key,
wherein the mobile terminal (100) comprises a processor (116), a memory (112) with program instructions (118), a communication interface (120) for communication with the ID token (200) and a communication interface (122) for communicating via a network (150),
wherein execution of the program instructions (118) by the processor (116) of the mobile terminal (100) causes the processor (116) to control the mobile terminal (100) to:
• send an issuing request for issuing the digital verifiable credential from the mobile terminal (100) via the network (150) to the issuer computer system (300) to initiate reading of the user attributes (206) by the ID-provider computer system (500) from the ID token (200),
• enable reading access of the ID-provider computer system (500) to the user attributes (206) stored in a protected memory area (204) of a memory (202) of the ID token (200) via the mobile terminal (100) and the network (150) for forwarding the read user attributes (206) to the issuer computer system (300),
• receive the digital verifiable credential issued by the issuer service through the digital credential wallet (102) of the mobile terminal (100) from the issuer computer system (300) via the network (150), wherein the digital verifiable credential is established in accordance with the data schema (406) provided in the blockchain (400), comprises the read user attributes (206) and is signed using the signature key (322) of the issuer service,
• store the received digital verifiable credential in the credential wallet (102) of the mobile terminal (100).

14. An issuer computer system (300) of an issuer service of an SSI infrastructure for reading one or more user attributes (206) from an ID token (200) and providing a digital verifiable credential with the read user attributes (206) in a digital credential wallet (102) of a mobile terminal (100), wherein the reading is performed via the mobile terminal (100) using an ID-provider computer system (500) of an ID-provider service,
wherein the SSI infrastructure comprises a blockchain (400), in which a data schema (406) for the digital verifiable credential and a public cryptographic key (318, 404) assigned to the issuer service are stored, wherein the data schema (406) is used as a template for verifying the digital verifiable credential, wherein the public cryptographic key (318, 404) of the issuer service is used as signature verification key for verifying a signature of the digital verifiable credential, which is created with a private cryptographic key (322) of the issuer service associated with the signature verification key as signature key,
wherein issuer computer system (300) comprises a processor (324), a memory (312) with program instructions (326) and a communication interface (328) for communicating via a network (150),
wherein an execution of the program instructions (326) by the processor (324) of the issuer computer system (300) causes the processor (324) to control the issuer computer system (300) to:
• receive an issuing request to issue the digital verifiable credential of the mobile terminal (100) via the network (150),
• initiate reading of the user attributes (206) by the ID-provider computer system (500) from a protected memory area (204) of a memory (202) of the ID token (200) in response to the issuing request,
• receive user attributes (206) read via the mobile terminal (100) and the network (150) from the ID-provider computer system (500),
• issue the digital verifiable credential, which comprises the read user attributes (206), established in accordance with the data schema (406) provided in the blockchain (400) and signed using the signature key (322) of the issuer service,
• send the issued digital verifiable credential via the network (150) to this credential wallet (102) of the mobile terminal (100).

15. A system (101) for reading one or more user attributes (206) from an ID token (200) and providing a digital verifiable credential with the read user attributes (206) in a digital credential wallet (102) of a mobile terminal (100) according to claim 13 using an issuer computer system (300) of an issuer service of an SSI infrastructure, wherein the issuer computer system (300) is an issuer computer system according to claim 14 and the reading by the issuer computer system (300) is performed via the mobile terminal (100) using an ID-provider computer system (500) of an ID-provider service,
wherein the system (101) further comprises, for example, the ID-provider computer system (500) and/or the blockchain (400).

## Revendications

1. Procédé de lecture d'un ou de plusieurs attributs d'utilisateur (206) à partir d'un jeton d'ID moyennant l'emploi d'un système informatique fournisseur d'ID (500) d'un service fournisseur d'ID et la fourniture d'un justificatif vérifiable numérique avec les attributs d'utilisateur (206) lus dans un portefeuille d'identité numérique (102) d'un terminal mobile (100) moyennant l'emploi d'un système informatique d'émetteur (300) d'un service d'émetteur d'une infrastructure SSI,
dans lequel les attributs d'utilisateur (206) d'un utilisateur (10) sont enregistrés dans une zone de mémoire sécurisée (204) d'une mémoire (202) du jeton d'ID (200),
dans lequel l'infrastructure SSI comprend une chaine de blocs (400) dans laquelle un schéma de données (406) pour le justificatif vérifiable numérique et une clé cryptographique publique (318, 404) associée au service d'émetteur sont déposés, où le schéma de données (406) sert de modèle pour la vérification du justificatif vérifiable numérique, où la clé cryptographique publique (318, 404) du service d'émetteur sert de clé de vérification de signature pour la vérification d'une signature du justificatif vérifiable numérique, laquelle est établie en tant que clé de signature avec une clé cryptographique privée (322) du service d'émetteur associée à la clé de vérification de signature,
le procédé comprenant :
• l'envoi d'une demande d'émission pour l'émission du justificatif vérifiable numérique à partir du terminal mobile (100) par le biais d'un réseau (150) vers le système informatique d'émetteur (300) pour initier une lecture des attributs d'utilisateur (206) par le système informatique fournisseur d'ID (500) à partir du jeton d'ID (200),
• l'autorisation d'un accès en lecture du système informatique fournisseur d'ID (500) aux attributs d'utilisateur (206) dans le jeton d'ID (200) par le biais du terminal mobile (100) et le réseau (150) permettant la poursuite de la transmission des attributs d'utilisateur (206) lus vers le système informatique d'émetteur (300),
• la réception du justificatif vérifiable numérique émis par le service d'émetteur par le portefeuille d'identité numérique (102) du terminal mobile (100) à partir du système informatique d'émetteur (300) par le biais du réseau (150), où le justificatif vérifiable numérique est établi en accord avec le schéma de données (406) fourni dans la chaine de blocs (400), comprend les attributs d'utilisateur (206) lus et est signé moyennant l'emploi de la clé de signature (322) du service d'émetteur,
• l'enregistrement du justificatif vérifiable numérique reçu dans le portefeuille d'identité (102) du terminal mobile (100).

2. Procédé selon la revendication 1, dans lequel l'autorisation de l'accès en lecture du système informatique fournisseur d'ID (500) comprend :
• l'authentification de l'utilisateur (10) vis-à-vis du jeton d'ID (200) moyennant l'emploi du terminal mobile (100),
• l'authentification du système informatique fournisseur d'ID (500) vis-à-vis du jeton d'ID (200) par le biais du terminal mobile (100) moyennant l'emploi d'un certificat de lecture basé sur une infrastructure de clés publiques PKI (516) du système informatique fournisseur d'ID (500) pour la lecture des attributs d'utilisateur (206) à partir du jeton d'ID (200),
• suite à une authentification réussie de l'utilisateur (10) et du système informatique fournisseur d'ID (500) vis-à-vis du jeton d'ID (200), l'accès en lecture du système informatique fournisseur d'ID (500) est libéré.

3. Procédé selon l'une des revendications précédentes, dans lequel le terminal mobile (100) établit un premier canal de communication chiffré par le biais du réseau (150) vers le système informatique d'émetteur (300), par lequel on envoie la demande d'émission,
dans lequel, dans le cas du premier canal de communication chiffré, il s'agit, par exemple, d'un canal TLS.

4. Procédé selon l'une des revendications précédentes, dans lequel le terminal mobile (100) comprend en outre un programme client (108) par lequel l'accès en lecture du système informatique fournisseur d'ID (500) sur le jeton d'ID (200) a lieu, où l'accès en lecture du système informatique fournisseur d'ID (500) sur le jeton d'ID (200) a lieu par le biais d'un deuxième canal de communication chiffré.

5. Procédé selon la revendication 4, dans lequel l'établissement du premier canal de communication chiffré a lieu du côté du terminal mobile (100) moyennant l'emploi d'un navigateur (106) installé sur le terminal mobile (100), où l'établissement d'un deuxième canal de communication chiffré comprend:
• la consultation d'une page web de l'émetteur moyennant l'emploi du navigateur (106), où la page web fournit une URL pour le rappel de paramètres permettant l'établissement du deuxième canal de communication chiffré, pour la lecture des attributs d'utilisateur (206),
• la consultation de l'URL moyennant l'emploi du navigateur (106),
• la fourniture des paramètres compris par l'URL consultée pour le programme client (108),
• l'établissement du deuxième canal de communication chiffré par le biais du programme client (108) moyennant l'emploi des paramètres fournis par l'URL, ou
dans lequel l'établissement du premier canal de communication chiffré a lieu du côté du terminal mobile (100) par le portefeuille d'identité (102), où l'établissement d'un deuxième canal de communication chiffré comprend :
• en réponse à la demande d'émission, la réception de l'URL pour le rappel de paramètres pour l'établissement du deuxième canal de communication chiffré par le portefeuille d'identité (102),
• la consultation de l'URL par le portefeuille d'identité (102),
• l'établissement du deuxième canal de communication chiffré par le biais du programme client (108) moyennant l'emploi des paramètres fournis par l'URL.

6. Procédé selon l'une revendications 4 à 5, le procédé comprenant en outre l'établissement d'un troisième canal de communication chiffré entre le portefeuille d'identité (102) et le système informatique d'émetteur (300), par le biais duquel le portefeuille d'identité (102) reçoit le justificatif vérifiable numérique, où l'établissement du troisième canal de communication chiffré comprend une authentification réciproque entre le portefeuille d'identité (102) et le système informatique d'émetteur (300).

7. Procédé selon la revendication 6, dans lequel le navigateur (106) reçoit une exhortation pour l'établissement du troisième canal de communication chiffré, où l'exhortation comprend un ou plusieurs paramètres du système informatique d'émetteur (500) pour l'établissement du troisième canal de communication chiffré et le navigateur (106) fournit l'exhortation au portefeuille d'identité (102) pour l'établissement du troisième canal de communication chiffré.

8. Procédé selon la revendication 7, dans lequel le navigateur (106) reçoit l'exhortation pour l'établissement du troisième canal de communication chiffré suite à une lecture réussie des attributs d'utilisateur (206), ou
dans lequel le navigateur (106) reçoit l'exhortation pour l'établissement du troisième canal de communication chiffré en réponse à la consultation de la page web du service d'émetteur, où un établissement réussi du troisième canal de communication chiffré est une condition nécessaire pour l'établissement du deuxième canal de communication chiffré pour la lecture des attributs d'utilisateur (206),
dans lequel l'URL pour l'établissement du deuxième canal de communication chiffré est fournie au navigateur (106) du terminal mobile (100) par exemple uniquement suite à l'établissement réussi du troisième canal de communication chiffré.

9. Procédé selon la revendication 6, dans lequel le portefeuille d'identité (102) comprend le programme client (108), où la demande d'émission est envoyée moyennant l'emploi du programme client (108), où le premier canal de communication chiffré est établi entre le portefeuille d'identité (102) et le système informatique d'émetteur (300),
dans lequel la demande d'émission est envoyée au système informatique d'émetteur (300), par exemple, moyennant l'emploi d'un appel APl.

10. Procédé selon la revendication 9, dans lequel le portefeuille d'identité (102), en réponse à la demande d'émission, reçoit l'exhortation pour l'établissement d'un troisième canal de communication chiffré entre le portefeuille d'identité (102) et le système informatique d'émetteur (300) et crée le troisième canal de communication chiffré moyennant l'emploi des paramètres fournis par l'exhortation,
dans lequel un établissement réussi du troisième canal de communication chiffré est une condition nécessaire pour l'établissement du deuxième canal de communication chiffré, lequel est créé comme un sous-canal chiffré dans le troisième canal de communication.

11. Procédé selon l'une des revendications 6 à 10, dans lequel, dans le cas du troisième canal de communication chiffré, il s'agit d'un canal DIDComm.

12. Procédé selon l'une des revendications précédentes, dans lequel le système informatique d'émetteur (300) comprend le système informatique fournisseur d'ID (500), ou
dans lequel, dans le cas du système informatique fournisseur d'ID (500), il s'agit d'un système informatique indépendant du système informatique d'émetteur (300),
dans lequel, par exemple, le système informatique fournisseur d'ID (500) poursuit la transmission des attributs d'utilisateur (206) lus au système informatique d'émetteur (300) par le biais d'un quatrième canal de communication chiffré.

13. Terminal mobile (100) permettant la lecture d'un ou de plusieurs attributs d'utilisateur (206) à partir d'un jeton d'ID (200) et la fourniture d'un justificatif vérifiable numérique avec les attributs d'utilisateur (206) lus dans un portefeuille d'identité numérique (102) du terminal mobile (100), où la lecture a lieu par le biais du terminal mobile (100) moyennant l'emploi d'un système informatique fournisseur d'ID (500) d'un service fournisseur d'ID, où, dans le cas du justificatif vérifiable numérique fourni, il s'agit d'un système informatique d'émetteur (300) d'un service d'émetteur d'un justificatif vérifiable numérique émis d'une infrastructure SSI,
dans lequel l'infrastructure SSI comprend une chaine de blocs (400), dans laquelle un schéma de données (406) pour le justificatif vérifiable numérique et une clé cryptographique publique (318, 404) associée au service d'émetteur sont déposés, où le schéma de données (406) sert de modèle pour la vérification du justificatif vérifiable numérique, où la clé cryptographique publique (318, 404) du service d'émetteur sert de clé de vérification d'une signature pour la vérification du justificatif vérifiable numérique, laquelle est établie en tant que clé de signature avec une clé cryptographique privée (322) du service d'émetteur associée à la clé de vérification de signature,
le terminal mobile (100) comprenant un processeur (116), une mémoire (112) avec des instructions de programme (118), une interface de communication (120) pour la communication avec le jeton d'ID (200) et une interface de communication (122) pour la communication par le biais d'un réseau (150),
dans lequel une exécution des instructions de programme (118) par le processeur (116) du terminal mobile (100) fait en sorte que le processeur (116) commande le terminal mobile (100) pour :
• l'envoi d'une demande d'émission pour l'émission du justificatif vérifiable numérique à partir du terminal mobile (100) par le biais d'un réseau (150) vers le système informatique d'émetteur (300) pour initier une lecture des attributs d'utilisateur (206) par le système informatique fournisseur d'ID (500) à partir du jeton d'ID (200),
• l'autorisation d'un accès en lecture du système informatique fournisseur d'ID (500) à des attributs d'utilisateur (206) enregistrés dans une zone de mémoire sécurisée (204) d'une mémoire (202) du jeton d'ID (200) par le biais du terminal mobile (100) et le réseau (150), permettant la poursuite de la transmission des attributs d'utilisateur (206) lus vers le système informatique d'émetteur (300),
• la réception du justificatif vérifiable numérique émis par le service d'émetteur par le portefeuille d'identité numérique (102) du terminal mobile (100) à partir du système informatique d'émetteur (300) par le biais du réseau (150), où le justificatif vérifiable numérique est établi en accord avec le schéma de données (406) fourni dans la chaine de blocs (400), comprend les attributs d'utilisateur (206) lus et est signé moyennant l'emploi de la clé de signature (322) du service émetteur,
• l'enregistrement du justificatif vérifiable numérique reçu dans le portefeuille d'identité (102) du terminal mobile (100).

14. Système informatique d'émetteur (300) d'un service émetteur d'une structure SSI permettant la lecture d'un ou de plusieurs attributs d'utilisateur (206) à partir d'un jeton d'ID (200) et la fourniture d'un justificatif vérifiable numérique avec les attributs d'utilisateur (206) lus dans un portefeuille d'identité numérique (102) d'un terminal mobile (100), où la lecture a lieu par le biais du terminal mobile (100) moyennant l'emploi d'un système informatique fournisseur d'ID (500) d'un service fournisseur d'ID,
dans lequel l'infrastructure SSI comprend une chaine de blocs (400) dans laquelle un schéma de données (406) pour le justificatif vérifiable numérique et une clé cryptographique publique (318, 404) associée au service d'émetteur sont déposés, où le schéma de données (406) sert de modèle pour la vérification du justificatif vérifiable numérique, où la clé cryptographique publique (318, 404) du service d'émetteur sert de clé de vérification d'une signature pour la vérification du justificatif vérifiable numérique, laquelle est établie en tant que clé de signature avec une clé cryptographique privée (322) du service d'émetteur associée à la clé de vérification de signature,
le système informatique d'émetteur (300) comprenant un processeur (324), une mémoire (312) avec des instructions de programme (326) et une interface de communication (328) pour la communication par le biais d'un réseau (150),
dans lequel une exécution des instructions de programme (326) par le processeur (324) du système informatique d'émetteur (300) fait en sorte que le processeur (324) commande le système informatique d'émetteur (300) pour :
• la réception d'une demande d'émission pour l'émission du justificatif vérifiable numérique par le terminal mobile (100) par le biais du réseau (150),
• l'initiation d'une lecture des attributs d'utilisateur (206) par le système informatique fournisseur d'ID (500) à partir d'une zone de mémoire sécurisée (204) d'une mémoire (202) du jeton d'ID (200) suite à la demande d'émission,
• la réception d'attributs d'utilisateurs (206) lus par l'intermédiaire du terminal mobile (100) et du réseau (150) par le système informatique fournisseur d'ID (500),
• la production du justificatif vérifiable numérique, lequel comprend les attributs d'utilisateur (206) lus, est construit en accord avec le schéma de données (406) fourni dans la chaine de blocs (400) et est signé moyennant l'emploi de la clé de signature (322) du service émetteur,
• l'envoi du justificatif vérifiable numérique à ce portefeuille d'identité (102) du terminal mobile (100) par le biais du réseau (150).

15. Système (101) permettant la lecture d'un ou de plusieurs attributs d'utilisateur (206) à partir d'un jeton d'ID (200) et la fourniture d'un justificatif vérifiable numérique avec les attributs d'utilisateur (206) lus dans un portefeuille d'identité numérique (102) d'un terminal mobile (100) selon la revendication 13, moyennant l'emploi d'un système informatique d'émetteur (300) d'un service d'émetteur d'une infrastructure SSI, où, dans le cas du système informatique d'émetteur (300), il s'agit d'un système informatique d'émetteur selon la revendication 14, et la lecture a lieu par le système informatique d'émetteur (300) par le biais du terminal mobile (100) moyennant l'emploi d'un système informatique fournisseur d'ID (500) d'un service fournisseur d'ID,
le système (101) comprenant en outre, par exemple, le système informatique fournisseur d'ID (500) et/ou la chaine de blocs (400).
